# EUROPÄISCHE PATENTSCHRIFT

(11) **EP 2 935 345 B1**
(45) Veröffentlichungstag und Bekanntmachung des Hinweises auf die Patenterteilung: **31.05.2017**
(21) Anmeldenummer: 13799600.5
(22) Anmeldetag: 06.12.2013
(51) Int. Cl.: C08F 2/06, C10L 1/196, C08L 31/04, C08F 220/18

(54) **POLYMERFORMULIERUNGEN IN LÖSEMITTELN MIT HOHEM FLAMMPUNKT, VERFAHREN ZU DEREN HERSTELLUNG UND DEREN VERWENDUNG ALS POUR-POINT-DEPRESSANTS FÜR ROHÖLE, MINERALÖLE ODER MINERALÖLPRODUKTE**
POLYMER FORMULATIONS IN SOLVENTS WITH A HIGH FLASH POINT, METHOD FOR THE PRODUCTION THEREOF AND USE THEREOF AS POUR-POINT DEPRESSANTS FOR CRUDE OILS, MINERAL OILS OR MINERAL OIL PRODUCTS
FORMULATIONS DE POLYMÈRES DANS DES SOLVANTS À HAUT POINT D'ÉCLAIR, PROCÉDÉ POUR LA PRÉPARATION ET L'UTILISATION DESDITES FORMULATIONS COMME PRODUITS AMÉLIORANT LE POINT D'ÉCOULEMENT POUR LES HUILES BRUTES, LES HUILES MINÉRALES ET LES PRODUITS PÉTROLIERS

(30) Priorität: 18.12.2012 EP 12197744
(43) Veröffentlichungstag der Anmeldung: 28.10.2015
(73) Patentinhaber: BASF SE, 67056 Ludwigshafen am Rhein (DE)
(72) Erfinder: FAUL, Dieter, 67150 Niederkirchen (DE); GARCIA CASTRO, Ivette, 67067 Ludwigshafen (DE); GUMLICH, Kai, 50858 Köln (DE); HEUKEN, Maria, 68163 Mannheim (DE); KONRAD, Rouven, 67591 Mörstadt (DE); NEUBECKER, Karin, 67227 Frankenthal (DE); FRENZEL, Stefan, 73054 Eislingen (DE)
(74) Vertreter: BASF IP Association
(86) Internationale Anmeldenummer: PCT/EP2013/075742
(87) Internationale Veröffentlichungsnummer: WO 2014/095408

(56) Entgegenhaltungen:
- EP-A1- 1 674 554
- EP-A1- 1 808 450
- EP-A1- 2 305 753
- WO-A2-2011/076337
- US-A1- 2007 213 231
- DATABASE WPI Week 201302 Thomson Scientific, London, GB; AN 2012-M26485 XP002720254, ZHANG C.: "Diesel pour point depressant, useful in petroleum refining, transportation and storage applications, comprises ethylene-vinyl acetate co-polymer, styrene-maleic acid octadecyl alkyl ester, polymethacrylate, and non-ionic surfactant", & CN 102 559 302 A (LINYI SHINENGDE ENVIRONMENTAL PROTECTION) 11. Juli 2012 (2012-07-11)

## Beschreibung

Die vorliegende Erfindung betrifft Polymerformulierungen umfassend mindestens zwei verschiedene Lösemittel mit einem Flammpunkt ≥ 60°C sowie polymere Zusammensetzungen erhältlich durch radikalische Polymerisation mindestens eines Alkyl(meth)acrylates in Gegenwart mindestens eines Ethylen-Vinylester-Copolymers. Sie betrifft weiterhin ein mehrstufiges Verfahren zur Herstellung derartiger Formulierungen sowie die Verwendung derartiger Formulierungen als Pour-Point-Depressants für Rohöle, Mineralöle oder Mineralölprodukte.

Unterirdische Erdölformationen weisen üblicherweise höhere Temperaturen auf. Nach der Förderung des Rohöls an die Erdoberfläche kühlt daher das geförderte Rohöl je nach Fördertemperatur sowie den Lager- oder Transportbedingungen mehr oder weniger stark ab.

Rohöle weisen je nach ihrer Herkunft unterschiedliche Anteile an sogenannten Wachsen auf, welche im Wesentlichen aus langkettigen n-Paraffinen bestehen. Der Anteil derartiger Paraffine kann je nach Art des Rohöls typischerweise 1 bis 30 Gew.-% des Rohöls betragen. Die Paraffine können beim Abkühlen beim Unterschreiten einer bestimmten Temperatur üblicherweise in Form von Plättchen kristallisieren. Durch die ausgefallenen Paraffine wird die Fließfähigkeit des Öls erheblich beeinträchtigt. Die plättchenförmigen n-Paraffinkristalle können eine Art Kartenhausstruktur bilden, welche das Rohöl einschließt, so dass das Rohöl stockt, obwohl der überwiegende Teil noch flüssig ist. Die niedrigste Temperatur, bei der eine Probe eines Öls beim Abkühlen gerade noch fließt, wird als Pour-Point ("Fließgrenze") bezeichnet. Für die Messung des Pour-Points werden standardisierte Messverfahren eingesetzt. Ausgefallene Paraffine können Filter, Pumpen, Rohrleitungen und andere Anlagen verstopfen oder sich in Tanks ablagern und verursachen so hohen Reinigungsaufwand.

Die Lagerstättentemperatur von Öllagerstätten liegt in der Regel oberhalb von Raumtemperatur, beispielsweise bei 40°C bis 100°C. Aus solchen Lagerstätten wird Rohöl noch warm gefördert, und es kühlt beim oder nach dem Fördern naturgemäß mehr oder weniger schnell auf Raumtemperatur oder bei entsprechenden klimatischen Verhältnissen auch auf Temperaturen darunter ab. Rohöle können Pour-Points oberhalb von Raumtemperatur aufweisen, so dass derartige Rohöle beim oder nach dem Fördern erstarren können.

Es ist bekannt, den Pour-Point von Rohölen durch geeignete Zusätze zu erniedrigen. Hierdurch kann verhindert werden, dass beim Abkühlen geförderten Rohöls Paraffine ausfallen. Geeignete Additive verhindern einerseits die Ausbildung der genannten, kartenhausähnlichen Strukturen und senken somit die Temperatur, bei der das Rohöl erstarrt. Weiterhin können Additive die Ausbildung feiner, gut kristallisierter, nicht-agglomerierender Paraffinkristalle fördern, so dass ein störungsfreier Öltransport sichergestellt ist. Derartige Additive werden als Pour-Point-Depressants bzw. Fließverbesserer bezeichnet.

Als Paraffin-Inhibitoren oder Wachs-Inhibitoren werden solche Substanzen bezeichnet, die das Ablagern von Paraffinen bzw. Paraffinwachsen auf Oberflächen, welche im Kontakt mit Rohölen oder anderen wachshaltigen Ölen und/oder Mineralölprodukten stehen, verhindern sollen.

Es ist bekannt, als Fließverbesserer Ethylencopolymere, insbesondere Copolymere aus Ethylen und ungesättigten Estern zu verwenden. Beispiele hierfür sind in DE-A-21 02 469 oder EP 84 148 A2 beschrieben.EP 2 305 753 offenbart eine Zusammensetzung die zumindest ein Polyalkyl(meth)acrylatPolymer mit einem Molekulargewicht M n von 1000 bis 10000 g/mol und einer Molekulargewichtsverteilung von 1 bis 8 und zumindest ein Ethylen- Vinylacetat Copolymer, das Monomereinheiten von einem Alkyl(meth)acrylat mit 1 bis 30 C-Atomen im Alkylkette enthält. Das Ethylen- Vinylacetat Copolymer wird mit langkettigen (Meth)acrylsäureestern gepfropft.

EP 1 808 450 offenbart Pfropfcopolymer, erhältlich durch Pfropfung eines Esters aus einem C8 bis C22 -Alkohol und Acrylsäure auf ein Copolymer, enthaltend neben Ethylen 3,5 bis 21 mol-% Vinylacetat und 0,5 bis 16 mol-% mindestens eines weiteren Vinylesters.

DE-A-16 45 785 offenbart Heizölgemische mit herabgesetztem Fließpunkt. Die Gemische enthalten mindestens 3 Gew.-% von Polymere mit unverzweigten, gesättigten Seitenketten mit mindestens 18 Kohlenstoffatomen, z.B. Homo- oder Copolymere von Alkylestern ungesättigter Mono- und Dicarbonsäuren sowie Homo-oder Copolymere verschiedener Alkylvinylether. DE-A-20 47 448 offenbart Additive zur Viskositätserniedrigung in paraffinbasischen Rohölen.

Bei den Additiven handelt es sich um Mischungen aus Polyvinylethern und Ethylen-Vinylacetat-Copolymeren.

EP 486 836 A1 offenbart Erdölmitteldestillate, beispielsweise Gasöle, Dieselöle oder Heizöl, welche zur Verbesserung der Fließeigenschaften in der Kälte polymere Zusätze enthalten. Bei den polymeren Zusätzen handelt es sich um eine Kombination üblicher Fließverbesserer auf Ethylenbasis, wie beispielsweise Copolymere aus Ethylen und Vinylacetat, Vinylpropionat oder Ethylhexylacrylat sowie Copolymere aus C₈- bis C₁₈-Alkyl(meth)acrylaten und/oder C₁₈- bis C₂₈-Alkylvinylethern im Gewichtsverhältnis 40 : 60 bis 95 : 5, wobei die Copolymere aus den Al-kyl(meth)acrylaten und/oder Alkylvinylethern und den konventionellen Fließverbesserern als Mischung vorliegen können oder die Copolymere aus den Alkyl(meth)acrylaten und/oder Al-kylvinylethern ganz oder teilweise auf die konventionellen Fließverbesserer aufgepfropft sein können. Als Lösemittel zur Durchführung der Polymerisation werden eine Vielzahl unterschiedlichster Lösemittel vorgeschlagen, beispielsweise Toluol, Xylol, Ethylbenzol, Cumol, hochsiedende Aromatengemische, aliphatische und cyclo-aliphatische Kohlenwasserstoffe wie n-Hexan, Cyclohexan, Methylcyclohexan, n-Octan, i-Octan, Paraffinöle, paraffinische Lösemittelgemische oder Tetrahydrofuran und Dioxan. Im einzigen Beispiel zur Herstellung eines Pfropfcopolymers werden n-Dodecylacrylat und n-Octadecylvinylether auf ein Copolymer aus Ethylen und Vinylpropionat mit einer mittleren molaren Masse Mₙ von ca. 2500 g/mol aufgepfropft. Die Pfropfung wird in Isoundecan als Lösemittel durchgeführt. Nach Ende der Umsetzung werden ein hochsiedendes aromatisches Lösemittelgemisch sowie weiteres, nicht gepfropftes Ethylen-Vinylpropionat-Copolymer zugegeben.

US 4,608,411 offenbart Pfropfcopolymere zur Verhinderung von Wachsausscheidungen aus Rohölen. Die Hauptkette besteht aus einem Copolymer aus Ethylen und einem Monomer ausgewählt aus der Gruppe von Vinylestern von C₂- bis C₁₈-Monocarbonsäuren, C₁- bis C₁₂-Estern ungesättigter Monocarbonsäuren oder ungesättigten α,β-Dicarbonsäuren, deren Estern oder Anhydriden. Hierauf werden Homo- oder Copolymere von Alkylacrylaten aufgepfropft, wobei deren Alkylgruppe mindestens 12 Kohlenstoffatome aufweist und wobei mindestens 20% der Alkylgruppen mindestens 22 Kohlenstoffatome aufweisen. Die Pfropfreaktion kann in aliphatischen oder aromatischen Lösemitteln erfolgen, bevorzugt in Toluol, Xylol oder aromatischen Lösemittelfraktionen. In den Beispielen wird Xylol als Lösemittel verwendet.

Kommerziell erhältliche Pfropfcopolymer-Formulierungen aus Ethylen-Vinylacetat-Copolymeren sowie (teilweise) darauf aufgepfropften Polyacrylaten mit langen Alkylketten zur Verwendung als Paraffin-Inhibitoren bzw. Pour-Point-Depressants werden häufig als hochkonzentrierte Lösungen in Toluol angeboten. Nachteilig hieran ist jedoch, dass der Flammpunkt von Toluol bei nur ca. 6 °C liegt. Dieser vergleichsweise niedrige Flammpunkt macht die Handhabung der Produkte, beispielsweise in einer Raffinerie oder auf einer Offshore-Plattform aufwändig, weil entsprechende Sicherheitsmaßnahmen beim Umgang mit der Formulierung getroffen werden müssen. Es besteht daher die Forderung des Marktes nach Pour-Point-Depressants, welche in Lösemitteln mit einem Flammpunkt von mindestens 60°C formuliert sind.

Die Verwendung anderer Lösemittel ist jedoch keineswegs unproblematisch, denn aus ökonomischen Gründen sollten die Pfropfcopolymere nicht aus den zur Synthese verwendeten Lösemitteln wie Toluol isoliert und erst in einem zweiten Schritt in geeigneten Lösemitteln zur Anwendung formuliert werden, sondern die im Zuge der Herstellung erhaltenen Formulierungen sollten direkt, ohne Isolierung des Polymers zur Anwendung verwendet werden können. Zwar sind typische Einsatzkonzentrationen von Pour-Point-Depressants von beispielsweise 500 ppm scheinbar klein. Diese Zahl bedeutet aber, dass 0,5 kg Pour-Point-Depressant pro t Rohöl eingesetzt werden müssen. Die weltweite Ölförderung betrug im Jahre 2011 rund 4 Milliarden t. Bei Pour-Point-Depressants handelt es sich daher nicht um kleinvolumige Spezialprodukte, sondern um Produkte, welche in großen Mengen kostengünstig hergestellt werden müssen.

Naturgemäß beeinflusst die Wahl des Lösemittels für eine Polymerisation den Prozess der Polymerisation ganz erheblich. Ersetzt man beispielsweise Toluol durch höhersiedende Alkylaromaten wie beispielsweise Cumol, dann kann dies bei der radikalischen Polymerisation die Geschwindigkeit der Kettenübertragung und damit das Molekulargewicht des erhaltenen Polymers beeinflussen.

Weiterhin beeinflusst die Wahl des Lösemittels naturgemäß das Löseverhalten der Polymere. Pour-Point-Depressants werden im Regelfalle als konzentrierte Lösungen geliefert und können von den Anwendern vor Ort in gewünschter Art und Weise zur Anwendung formuliert werden. Die gelieferten Produkte sollten flüssig sein, um das Aufschmelzen vor Ort zu vermeiden und die Lösungen sollten auch langfristig stabil bleiben und nicht zur Phasentrennung neigen, so dass sie möglichst einfach gelagert werden können.

Aufgabe der Erfindung war es daher, ein Verfahren zur Herstellung von Pour-Point-Depressants aus Ethylen-Vinylacetat-Copolymeren sowie Alkylacrylaten in Lösemitteln mit einem Flammpunkt von mindestens 60°C bereitzustellen, wobei die Formulierungen zumindest den gleichen Einfluss auf den Pour-Point besitzen sollten wie konventionelle, in Toluol hergestellte Produkte. Die Formulierungen sollten in einfacher und sicherer Art und Weise Rohölen zugesetzt werden können und die Lösungen sollen eine ausreichende Stabilität aufweisen.

Dementsprechend wurde ein Verfahren zur Herstellung einer Polymerformulierung mindestens umfassend
- zwei verschiedene Lösemittel, sowie
- eine polymere Zusammensetzung erhältlich durch radikalische Polymerisation mindestens eines monoethylenisch ungesättigten Monomers (A) in Gegenwart mindestens eines Ethylen-Vinylester-Copolymers (B) gefunden, wobei
   ▪ die Monomere (A) um mindestens 70 Gew.-% -bezogen auf die Menge aller Monomere (A)- mindestens eines Alkyl(meth)acrylates (A1) der allgemeinen Formel H₂C=CR¹-COOR² umfassen, wobei R¹ für H oder eine Methylgruppe und R² für einen linearen Alkylrest mit 12 bis 60 Kohlenstoffatomen steht,
   ▪ die Ethylen-Vinylester-Copolymere (B) 55 bis 85 Gew.-% Ethylen sowie 15 bis 45 Gew.-% Vinylester der allgemeinen Formel H₂C=CH-O-(O)C-R³ (III) umfassen, wobei R³ für H oder einen C₁- bis C₄ Kohlenwasserstoffrest steht, und
   ▪ die Menge der Monomere (A) 70 bis 90 Gew.-% und die der Ethylen-Vinylester-Copolymere (B) 10 bis 30 Gew.-% bezogen auf die Summe der Monomere (A) und der Ethylen-Vinylester-Copolymere (B) zusammen beträgt,
   und wobei es sich bei den Lösemitteln mindestens um
- ein gesättigte aliphatische Kohlenwasserstoffgruppen umfassendes, unpolares Lösemittel (L1) mit einem Flammpunkt ≥ 60°C, und
- einen aromatischen Kohlenwasserstoff (L2) mit einem Flammpunkt ≥ 60°C handelt, und das Verfahren mindestens die folgenden Verfahrensschritte umfasst:
   (I) Bereitstellen einer Lösung mindestens umfassend Monomere (A), sowie Ethylen-Vinylester-Copolymere (B) jeweils in den oben genannten Mengen in mindestens einem Lösemittel (L1), sowie
   (II) radikalische Polymerisation der Monomere (A) in Gegenwart der Ethylen-Vinylester-Copolymere (B) durch Zugabe mindestens eines thermisch zerfallenden Initiators für die radikalische Polymerisation zu der gemäß (II) erhaltenen Lösung und Polymerisation bei einer Temperatur von mindestens 50°C, wobei man das Reaktionsmedium vor und/oder während und/oder nach der Polymerisation mit Lösemitteln (L2) ververdünnt, wobei man die Menge der Lösemittel (L1) und (L2) so bemisst, dass die Konzentration aller hergestellten Polymere zusammen am Ende von Verfahrensschritt (11) 35 bis 55 Gew.-% bezüglich der Summe aller Komponenten der Lösung beträgt.
Bei den Lösemitteln (L1) handelt es sich bevorzugt um gesättigte aliphatische Kohlenwasserstoffe mit einem Flammpunkt ≥ 60°C.

Die Bereitstellung der Lösung der Monomere (A1) in Verfahrensschritt (I) erfolgt bevorzugt zweistufig, indem man zunächst mindestens einen Alkohol der allgemeinen Formel R²-OH mit (Meth)acrylsäure H₂C=CR¹-COOH in Gegenwart von Lösemitteln (L1) verestert und die gebildete Lösung anschließend mit mindestens einem Ethylen-Vinylester-Copolymer (B) vermischt. In einem zweiten Aspekt der Erfindung wurden Polymerformulierungen mindestens umfassend
- zwei verschiedene Lösemittel, sowie
- eine polymere Zusammensetzung erhältlich durch radikalische Polymerisation mindestens eines monoethylenisch ungesättigten Monomers (A) in Gegenwart mindestens eines Ethylen-Vinylester-Copolymers (B) gefunden, wobei
   ▪ die Monomere (A) um mindestens 70 Gew.-% -bezogen auf die Menge aller Monomere (A)- mindestens eines Alkyl(meth)acrylates (A1) der allgemeinen Formel H₂C=CR¹-COOR² umfassen, wobei R¹ für H oder eine Methylgruppe und R² für einen linearen Alkylrest mit 12 bis 60 Kohlenstoffatomen steht,
   ▪ die Ethylen-Vinylester-Copolymere (B) 55 bis 85 Gew.-% Ethylen sowie 15 bis 45 Gew.-% Vinylester der allgemeinen Formel H₂C=CH-O-(O)C-R³ (III) umfassen, wobei R³ für H oder einen C₁- bis C₄ Kohlenwasserstoffrest steht, und
   ▪ die Menge der Monomere (A) 70 bis 90 Gew.-% und die der Ethylen-Vinylester-Copolymere (B) 10 bis 30 Gew.-% bezogen auf die Summe der Monomere (A) und der Ethylen-Vinylester-Copolymere (B) zusammen beträgt,
   wobei es sich bei den Lösemitteln mindestens um
- ein gesättigte aliphatische Kohlenwasserstoffgruppen umfassendes, unpolares Lösemittel (L1) mit einem Flammpunkt ≥ 60°C, und
- einen aromatischen Kohlenwasserstoff (L2) mit einem Flammpunkt ≥ 60°C handelt, wobei die Konzentration aller Polymere zusammen 35 bis 55 Gew.-% bezüglich der Summe aller Bestandteile der Formulierung beträgt.
In einem dritten Aspekt wurde die Verwendung der Polymerformulierung als Pour-Point-Depressant für Rohöl, Mineralöl und/oder Mineralölprodukte gefunden, indem man dem Rohöl, dem Mineralöl und/oder den Mineralölprodukten mindestens die besagte Polymerformulierung zusetzt.

Zur Erfindung ist im Einzelnen das Folgende auszuführen:

### Eingesetzte Ausgangsmaterialien

### Lösemittel L1

Zur Ausführung der Erfindung wird mindestens ein gesättigte aliphatisches Kohlenwasserstoffgruppen umfassendes, unpolares Lösemittel (L1) mit einem Flammpunkt ≥ 60°C eingesetzt. Selbstverständlich kann auch ein Gemisch verschiedener Lösemittel (L1) eingesetzt werden. Die Lösemittel (L1) sollen nicht polymerisierbar sein und keine oder keine wesentliche Regelungswirkung im Zuge der radikalischen Polymerisation haben. Beispiele geeigneter Lösemittel umfassen gesättigte aliphatische Kohlenwasserstoffe, gesättigte aliphatische Alkohole oder Ester aus gesättigten aliphatischen Carbonsäuren und gesättigten aliphatischen Alkoholen, mit der Maßgabe, dass die Lösemittel jeweils einen Flammpunkt ≥ 60°C aufweisen. Beispiele für Alkohole umfassen aliphatische Alkohole mit mindestens 8 Kohlenstoffatomen wie 1-Octanol, 1-Decanol oder 1-Dodecanol. Beispiele für Ester umfassen Ester gesättigter Fettsäuren mit mindestens 8 Kohlenstoffatomen mit gesättigten aliphatischen Alkoholen, wie beispielsweise Laurinsäuremethylester oder Stearinsäuremethylester. Technische Gemische verschiedener aliphatischer Ester sind kommerziell erhältlich. In einer weiteren Ausführungsform der Erfindung können Ester aliphatischer oder cycloaliphatischer Dicarbonsäuren eingesetzt werden, wie beispielsweise Dialkylester von Cyclohexan-1,2-dicarbonsäure wie Cyclohexan-1,2-dicarbonsäurediisononylester.

In einer bevorzugten Ausführungsform der Erfindung handelt es sich bei den Lösemitteln (L1) um gesättigte aliphatische Lösemittel bzw. Lösemittelgemische mit einem Flammpunkt ≥ 60°C. Es kann sich sowohl um paraffinische als auch um naphthenische, also gesättigte cylische Kohlenwasserstoffe handeln. Gesättigte aliphatische Kohlenwasserstoffe mit einem Flammpunkt ≥ 60°C sind hochsiedend und weisen üblicherweise einen Siedepunkt von mindestens 175°C auf. Beispiele geeigneter Kohlenwasserstoffe umfassen n-Undecan (Flammpunkt 60°C, Siedepunkt 196°C) oder n-Dodecan (Flammpunkt 71 °C, Siedepunkt 216°C). Bevorzugt können technische Gemische von Kohlenwasserstoffen eingesetzt werden, beispielsweise Gemische paraffinischer Kohlenwasserstoffe, Gemische paraffinischer und naphtenischer Kohlenwasserstoffe oder Gemische von Isoparaffinen. Für den Fachmann ist klar, dass technische Gemische noch geringe Reste an aromatischen oder ungesättigten Kohlenwasserstoffen enthalten können. Der Gehalt an aromatischen und/oder ungesättigten Kohlenwasserstoffen sollte aber in der Regel < 1 Gew.-%, bevorzugt < 0,5 Gew.-% und besonders bevorzugt < 0,1 Gew.-% betragen. Technische Gemische gesättigter aliphatischer Lösemittel sind kommerziell erhältlich, beispielsweise technische Gemische der Shellsol^{®} D-Reihe oder der Exxsol^{®} D-Reihe.

Selbstverständlich können auch Gemische verschiedener Lösemittel (L1) eingesetzt werden. In einer bevorzugten Ausführungsform der Erfindung werden als Lösemittel (L1) ausschließlich gesättigte aliphatische Lösemittel bzw. Lösemittelgemische eingesetzt.

### Aromatische Lösemittel L2

Zur Ausführung der Erfindung werden weiterhin aromatische Lösemittel bzw. Lösemittelgemische mit einem Flammpunkt ≥ 60°C (L2) eingesetzt. Derartige Kohlenwasserstoffe sind hochsiedend und weisen üblicherweise einen Siedepunkt von mindestens 175°C auf. Prinzipiell können alle aromatischen Kohlenwasserstoffe eingesetzt werden, welche einen Flammpunkt ≥ 60°C aufweisen, beispielsweise Naphthalin. Bevorzugt können technische Gemische von aromatischen Kohlenwasserstoffen eingesetzt werden. Technische Gemische aromatischer Lösemittel sind kommerziell erhältlich, beispielsweise technische Gemische der Shellsol^{®} A-Reihe oder der Solvesso^{®} -Reihe.

### Monomere (A)

Bei den eingesetzten Monomeren (A) handelt es sich um monoethylenisch ungesättigte Monomere, mit der Maßgabe, dass es sich bei mindestens 70 Gew.-% davon um Alkyl(meth)acrylate (A1) der allgemeinen Formel H₂C=CR¹-COOR² handelt. Hierbei steht wobei R¹ für H oder eine Methylgruppe, bevorzugt für H, und R² steht für einen linearen Alkylrest mit 12 bis 60 Kohlenstoffatomen, bevorzugt 16 bis 30 Kohlenstoffatomen, besonders bevorzugt 18 bis 24 Kohlenstoffatomen und beispielsweise 18 bis 22 Kohlenstoffatomen. Selbstverständlich können Gemische verschiedener Alkyl(meth)acrylate (A1) eingesetzt werden. Beispielsweise können Gemische eingesetzt werden, bei denen R² für C₁₆- und C₁₈-Reste oder C₁₈-, C₂₀- und C₂₂-Reste steht.

Neben den Monomeren (A1) können weitere, von den Monomeren (A1) verschiedene Monomere (A) verwendet werden. Mithilfe von weiteren Monomeren (A) neben den Monomeren (A1) lassen sich die Eigenschaften der erfindungsgemäßen Formulierungen modifizieren und an die gewünschten Eigenschaften anpassen. Der Fachmann trifft eine geeignete Auswahl. Die Auswahl ist nur dadurch beschränkt, dass weitere Monomere (A) mit den Lösemitteln (L1) und den Monomeren (A1) bei der gewählten Einsatzkonzentration mischbar sein müssen.

Bei weiteren Monomeren (A) kann es sich insbesondere um (Meth)acrylate, welche nicht der obigen Definition für die Monomere (A1) entsprechen, Vinylester, Vinylether, Vinylamide oder Vinylamine handeln.

In einer Ausführungsform der Erfindung handelt es sich bei weiteren Monomeren (A) um (Meth)acrylate (A2) der allgemeinen Formel H₂C=CR¹-COOR⁴, wobei R¹ für H oder Methyl und R⁴ für mindestens einen Kohlenwasserstoffrest ausgewählt aus der Gruppe von Resten R^{4a}, R^{4b}, R^{4c} und R^{4d} steht, wobei die Reste wie folgt definiert sind:
- R^{4a}:: Lineare Alkylreste mit 1 bis 11, bevorzugt 2 bis 10 Kohlenstoffatomen,
- R^{4b}:: Verzweigte Alkylreste mit 4 bis 60, bevorzugt 4 bis 30, besonders bevorzugt 4 bis 17 Kohlenstoffatomen,
- R^{4c}:: Unsubstituierte oder alkylsubstituierte, gesättigte, cyclische Kohlenwasserstoffreste mit 5 bis 30, bevorzugt 6 bis 17 Kohlenstoffatomen, oder
- R^{4d}:: Unsubstituierte oder alkylsubstituierte, aromatische Kohlenwasserstoffreste mit 6 bis 30, bevorzugt 6 bis 18 Kohlenstoffatomen.

Beispiele linearer Alkylreste R^{4a} umfassen Ethyl-, n-Propyl-, n-Butyl-, n-Pentyl-, n-Hexyl-, n-Heptyl-, n-Octyl-, n-Nonyl-, n-Decyl- und n-Undecylreste, bevorzugt sind n-Propyl-, n-Butyl-, n-Pentyl-, n-Hexyl-, n-Heptyl-, n-Octyl-, n-Nonyl- und n-Decylreste.

Beispiele verzweigter Alkylreste R^{4b} umfassen i-Butyl-, t-Butyl-, 2,2'Dimethylpropyl-, 2-Ethylhexyl-, 2-Propylheptyl-, i-Nonanol-, i-Decyl-, i-Tridecyl-, i-Heptadecylreste, bevorzugt sind t-Butyl-, 2-Ethylhexyl- und 3-Propylheptylreste.

Ein Beispiel für einen cyclischen Alkylrest R^{4c} ist ein Cyclohexylrest.

Beispiele aromatischer Kohlenwasserstoffreste R^{4d} umfassen Phenyl-, 4-Methylphenyl-, Benzyl- oder 2-Phenylethylreste.

In einer weiteren Ausführungsform der Erfindung handelt es sich bei weiteren Monomeren (A) um (Meth)acrylate (A3) der allgemeinen Formel H₂C=CR¹-COOR⁵ wobei R¹ für H oder Methyl und R⁵ für einen linearen oder verzweigten aliphatischen und/oder aromatischen Kohlenwasserstoffrest mit 1 bis 60, bevorzugt 2 bis 30 Kohlenstoffatomen steht, der mit OH-Gruppen substituiert sein kann und/oder bei dem nicht benachbarte Kohlenstoffatome durch Sauerstoffatome substituiert sein können. Mit anderen Worten können Reste R³ also OH-Gruppen und/oder Ethergruppen -O- umfassen. Beispiele für (Meth)acrylate (A3) umfassen Hydroxyethyl-(meth)acrylat, Hydroxypropyl(meth)acrylat, Phenoxyethylacrylat, oder Polypropylenglykol-mono(meth)acrylat.

In einer weiteren Ausführungsform der Erfindung handelt es sich bei weiteren Monomeren (A) um Vinylester der allgemeinen Formel H₂C=C-O-(O)C-R⁶ (A4), wobei R⁶ für einen linearen oder verzweigten Alkylrest mit 1 bis 60 Kohlenstoffatomen, bevorzugt 2 bis 30 Kohlenstoffatomen steht. Beispiele für Reste R⁶ umfassen Methyl-, Ethyl-, n-Propyl- oder n-Butylreste.

In einer bevorzugten Ausführungsform der Erfindung handelt es sich bei weiteren Monomeren (A) um mindestens ein Monomer (A2), bevorzugt um solche mit einem Rest R^{4b}, insbesondere Resten R^{4b} mit 4 bis 17 Kohlenstoffatomen. Beispiele bevorzugter Monomere (A2) umfassen t-Butyl(meth)acrylat, 2-Ethylhexyl(meth)acrylat und 2-Propylheptyl(meth)acrylat, besonders bevorzugt ist t-Butyl(meth)acrylat.

Erfindungsgemäß beträgt die Menge der Alkyl(meth)acrylate (A1) bezüglich der Gesamtmenge aller Monomere (A) mindestens 70 Gew.-%, bevorzugt mindestens 85 Gew.-%, besonders bevorzugt mindestens 95 Gew.-% und ganz besonders bevorzugt werden als Monomere (A) ausschließlich Alkyl(meth)acrylate (A1) eingesetzt.

In einer Ausführungsform der Erfindung wird als Monomere (A) eine Mischung aus Alkyl(meth)acrylaten (A1) und Alkyl(meth)acrylaten (A2) eingesetzt, beispielsweise eine Mischung aus 70 bis 99 Gew.-% der Monomere (A1) und 1 bis 30 Gew.-% der Monomere (A2), bevorzugt eine Mischung aus 70 bis 95 Gew.-% der Monomere (A1) und 5 bis 30 Gew.-% der Monomere (A2).

### Ethylen-Vinylester-Copolymere (B)

Die eingesetzten Ethylen-Vinylester-Copolymere (B) umfassen Ethylen sowie Vinylester der allgemeinen Formel H₂C=CH-O-(O)C-R³. Hierbei steht R³ für H oder einen C₁- bis C₄-Kohlenwasserstoffrest, beispielsweise einen Methyl-, Ethyl-, n-Propyl- oder n-Butylrest. Bevorzugt steht R³ für H, Methyl oder Ethyl und besonders bevorzugt für Methyl.

Neben Ethylen und den Vinylestern können optional noch weitere Monomere vorhanden sein. Die Menge derartiger weiterer Monomere sollte aber 20 Gew.-%, bevorzugt 10 Gew.-% bezüglich der Menge aller Monomere nicht übersteigen und besonders bevorzugt sind neben Ethylen und den Vinylestern keine weiteren Monomere vorhanden.

Die Menge an Ethylen in den Ethylen-Vinylester-Copolymeren (B) beträgt 55 bis 85 Gew.-% und die Menge an Vinylestern beträgt 15 bis 45 Gew.-% bezüglich der Menge aller Monomere.

Bevorzugt beträgt die Menge an Ethylen 55 bis 75 Gew.-% und die Menge an Vinylestern 25 bis 45 Gew.-%, besonders bevorzugt 30 bis 40 Gew.-% und ganz besonders bevorzugt beträgt die Menge an Ethylen 60 bis 70 Gew.-% und die Menge an Vinylestern 30 bis 40 Gew.-%.

Das gewichtsmittlere Molekulargewicht M_{w} der eingesetzten Ethylen-Vinylester-Copolymere (B) beträgt bevorzugt mindestens 30000 g/mol, beispielsweise 30000 g/mol bis 200000 g/mol, bevorzugt 50000 g/mol bis 150000 g/mol.

### Verfahrensschritt (I) - Bereitstellen einer Lösung der Ausgangsmaterialien für die Polymerisation

In Verfahrensschritt (I) wird eine Lösung mindestens umfassend die Monomere (A) sowie ein Ethylen-Vinylester-Copolymer (B) in mindestens einem Lösemittel (L1) bereitgestellt. Erfindungsgemäß umfassen die Monomere (A) mindestens 70 Gew.-% mindestens eines Alkyl(meth)acrylats (A1) sowie optional weitere, davon verschiedene Monomere (A).

Dies kann erfolgen, indem man die Monomere (A), darunter mindestens 70 Gew. % Alkyl(meth)acrylate (A1) sowie mindestens ein Ethylen-Vinylester-Copolymer (B) in mindestens einem Lösemittel (L1) löst. Dies kann erfolgen indem man festes Ethylen-Vinylester-Copolymer (B), die Monomere (A), darunter die Alkyl(meth)acrylate (A1) mit den Lösemitteln (L)1 intensiv vermischt, beispielsweise durch Rühren. Das Lösen kann durch eine Erhöhung der Temperatur, beispielsweise auf ca. 50 bis 80°C beschleunigt werden. Alternativ kann man die Monomere (A) und das Ethylen-Vinylester-Copolymer (B) jeweils getrennt in Lösemitteln (L1) lösen und die erhaltenen Lösungen miteinander vermischen. Selbstverständlich sind auch noch weitere Varianten der Vermischung möglich.

Das Mischungsverhältnis von Monomeren (A) und Ethylen-Vinylester-Copolymeren (B) wird je nach den gewünschten Eigenschaften der zu synthetisierenden polymeren Zusammensetzung gewählt, wobei die Menge der Monomere (A) zumindest 50 Gew.-% bezogen auf die Summe aus Monomeren A und Ethylen-Vinylester-Copolymeren B betragen sollte. In der Regel beträgt die Menge der Monomere (A) 70 bis 90 Gew.-% und die der Ethylen-Vinylester-Copolymere (B) 10 bis 30 Gew.-%. Bevorzugt beträgt die Menge der Monomere (A) 75 bis 85 Gew.-% und die der Ethylen-Vinylester-Copolymere (B) 15 bis 25 Gew.-%.

Die erhaltene Lösung aus Alkyl(meth)acrylaten (A1) optional weiteren Monomeren (A), beispielsweise weiteren Monomeren (A2), (A3) und/oder (A4) sowie Ethylen-Vinylester-Copolymeren (B) in Lösemitteln (L1) wird für Verfahrensschritt (II) eingesetzt.

### Zweistufiges Verfahren zur Bereitstellung der Lösung der Monomere (A)

In einer bevorzugten Ausführungsform von Verfahrensschritt (I) erfolgt das Bereitstellen der Lösung in einem zweistufigen Verfahren, umfassend die Verfahrensschritte (la) und (Ib).

### Verfahrensschritt (Ia)

In Verfahrensschritt (la) wird eine Lösung von Alkyl(meth)acrylaten (A1) der allgemeinen Formel H₂C=CR¹-COOR² in Lösemitteln (L1) durch Veresterung mindestens eines Alkohols der allgemeinen Formel R²-OH mit (Meth)acrylsäure H₂C=CR¹-COOH in Gegenwart von Lösemitteln (L1) hergestellt, wobei die Reste R¹ und R² die oben definierte Bedeutung haben. Bevorzugt ist Acrylsäure.

Als Alkohole R²-OH zur Veresterung können definierte lineare Alkohole eingesetzt werden. Beispiele umfassen Hexadecan-1-ol (Cetylalkohol), Octadecan-1-ol (Stearylalkohol), Nonadecan-1-ol, Eicosan-1-ol (Arachylalkohol), Heneicosan-1-ol, Docosan-1-ol (Behenylalkohol), Tetracosan-1-ol, Hexacosan-1-ol, Octacosan-1-ol oder Tricontan-1-ol. Vorteilhaft können auch technische Gemische verschiedener linearer Alkohole eingesetzt werde, wobei es sich um Fettalkohole oder um synthetische Alkohole handeln kann. Beispiele bevorzugter Mischungen umfassen Mischungen von C₁₆/C₁₈-Alkoholen (Talgfettalkohole) oder Gemische von C₁₈/C₂₀/C₂₂-Alkoholen, wobei derartige Mischungen selbstverständlich auch noch weitere Alkohole als Nebenkomponente in geringen Mengen enthalten können.

Erfindungsgemäß wird die Veresterung in gesättigten aliphatischen Kohlenwasserstoffen als Lösemittel (L1) durchgeführt. Einzelheiten zu gesättigten aliphatischen Kohlenwasserstoffen bzw. Kohlenwasserstoffgemischen und bevorzugten gesättigten aliphatischen Kohlenwasserstoffen bzw. Kohlenwasserstoffgemischen wurden bereits oben dargestellt. Die Menge der Kohlenwasserstoffe wird hierbei bevorzugt so gewählt, dass die Konzentration der gebildeten Alkyl(meth)acrylate A1 in den gesättigten, aliphatischen Kohlenwasserstoffen nach Ende der Veresterung 40 bis 90 Gew.-%, besonders bevorzugt 50 bis 85 Gew.-% bezüglich der Summe aller Komponenten der Lösung beträgt.

Die Veresterung kann nach dem Fachmann prinzipiell bekannten Methoden durchgeführt werden, beispielsweise nach den von EP 486 836 A1 beschriebenen Verfahren. Die Veresterung kann unter Verwendung üblicher saurer Veresterungskatalysatoren wie Schwefelsäure, p-Toluolsulfonsäure, Methansulfonsäure oder sauren Ionenaustauschern durchgeführt werden. Weiterhin ist es empfehlenswert, Polymerisationsinhibitoren zu verwenden, beispielsweise Hydrochinonderivate oder 4-Methoxyphenol. Die Veresterung kann in prinzipiell bekannter Art und Weise durch Erhitzen der Mischung vorgenommen werden, bevorzugt auf eine Temperatur > 100°C, beispielsweise 100°C bis 160°C, wobei man gebildetes Reaktionswasser abdestilliert. Neben dem Wasser abdestillierte, gesättigte aliphatische Kohlenwasserstoffe kann man von Wasser in üblicher Art und Weise in Wasserabscheidern abtrennen. Die Kohlenwasserstoffe können in die Reaktionsmischung zurückgeführt werden.

### Verfahrenssschritt (Ib)

Die in Verfahrensschritt (la) bereitgestellte Lösung von Alkyl(meth)acrylaten (A1) in Lösemitteln (L1) wird in Verfahrensschritt (Ib) mit mindestens einem Ethylen-Vinylester-Copolymer (B) vermischt. Es kann selbstverständlich auch eine Mischung mehrerer, verschiedener Ethylen-Vinylester-Copolymere (B) eingesetzt werden. Optional können in Verfahrensschritt (II) auch noch weitere Monomere (A) untergemischt werden. Verfahrensschritt (Ib) wird bevorzugt in der gleichen Apparatur durchgeführt, in der auch Verfahrensschritt (II) durchgeführt wird.

### Verfahrensschritt (II) - Radikalische Polymerisation

In Verfahrensschritt (II) werden die in den Lösemitteln (L1) gelösten Monomere (A), umfassend mindestens 75 Gew.-% Monomere (A1) in Gegenwart der Ethylen-Vinylester-Copolymere (B) radikalisch polymerisiert.

Die radikalische Polymerisation wird durchgeführt, indem man der in Verfahrensschritt (I) erhaltenen Lösung mindestens einen thermisch zerfallenden Initiator für die radikalische Polymerisation zugibt. Naturgemäß werden die eingesetzten Initiatoren so gewählt, dass sie im Polymerisationsmedium löslich sind. Bevorzugte Polymerisationsinitiatoren umfassen öllösliche Azoverbindungen, insbesondere solche mit einer 10 h-Halbwertszeit von 50°C bis 70°C. Beispiele geeigneter Initiatoren umfassen Dimethyl-2,2'-azobis(2-methylpropionat) (10 h - Halbwertszeit ca. 66 °C), 2,2'-Azobis(2-methylbutyronitril) (10 h - Halbwertszeit ca. 67°C oder 2,2'-Azobis(2,4-dimethylvaleronitril) (10 h - Halbwertszeit ca. 51 °C). Derartige Initiatoren sind kommerziell erhältlich (Fa. Wako). Das Gewichtsverhältnis von Monomeren (A) zu den Initiatoren beträgt in der Regel etwa 100:1 bis 150:1, bevorzugt 125:1 bis 140:1. Es kann die Gesamtmenge der Initiatoren zu Beginn der Polymerisation vorhanden sein, bevorzugt gibt man aber den Initiator nach und nach zu. Die Zugabe kann portionsweise oder kontinuierlich, bevorzugt kontinuierlich erfolgen.

Zum Einsatz in der Polymerisation werden die Polymerisationsinitiatoren bevorzugt in Lösemitteln (L1) und/oder Lösemitteln (L2) gelöst und die Lösung kann dem Reaktionsansatz zugegeben werden.

Weiterhin können in prinzipiell bekannter Art und Weise Molekulargewichtsregler zugegeben werden. Beispiele für Regler umfassen Alkohole wie Isopropanol, Allylalkohol oder Buten-2-ol, Thiole wie Ethanthiol oder Aldehyde wie Crotonaldehyd. Die Menge der Molekulargewichtsregler beträgt in der Regel 1 bis 4 Gew.-% bezüglich der Monomere (A), bevorzugt 2 bis 3 Gew.-% bezüglich der Monomere (A).

Die radikalische Polymerisation wird in prinzipiell bekannter Art und Weise durch Erwärmen des Reaktionsansatzes ausgelöst. Die Polymerisationstemperatur sollte oberhalb der 10 h-Halbwertszeit des Initiators liegen und beträgt in der Regel mindestens 50°C. Bewährt hat sich eine Polymerisationstemperatur von 50 bis 90°C. In der Regel wird die Polymerisation in prinzipiell bekannter Art und Weise unter einem Schutzgas wie Stickstoff oder Argon vorgenommen.

Die Polymerisation kann vorgenommen werden, indem man die in Verfahrensschritt (I) erhaltene Lösung in einem geeigneten -üblicherweise gerührten- Reaktionsgefäß vorlegt, wobei man vorteilhaft bereits Verfahrensschritt (II) in der gleichen Apparatur durchführt wie Verfahrensschritt (I) bzw. (Ib). Zur Lösung gibt man falls gewünscht einen oder mehrere Molekulargewichtsregler. Nach dem Erreichen der gewünschten Polymerisationstemperatur gibt man nach und nach eine Lösung des Polymerisationsinitiators zu dem zu polymerisierenden Gemisch. Die Dauer der Zugabe kann 0,5 h bis 10 h betragen, ohne dass die Erfindung auf diesen Bereich beschränkt sein soll. Nach der vollständigen Zugabe des Initiators sollte sich im Regelfalle noch eine Nachpolymerisationszeit anschließen. Diese kann beispielsweise 0,5 bis 5 h betragen. Selbstverständlich kann man den Initiator auch bereits vor dem Aufheizen zugeben.

Erfindungsgemäß verdünnt man vor und/oder während und/oder nach der Polymerisation das Reaktionsmedium mit Lösemitteln (L2).

Der Begriff "vor der Polymerisation" bedeutet, dass die Zugabe erfolgt, bevor die Polymerisation durch Zugabe der Initiatoren gestartet wird.

Der Begriff "nach der Polymerisation" bedeutet, dass die Zugabe erfolgt, nachdem die Polymerisation vollständig oder zumindest im Wesentlichen abgeschlossen ist, aber die Reaktionsmischung noch nicht vollständig von der Polymerisationstemperatur auf Raumtemperatur abgekühlt ist. Sie erfolgt im Regelfalle noch in der zur Polymerisation verwendeten Apparatur. Bevorzugt erfolgt eine Zugabe "nach der Polymerisation" unmittelbar im Anschluss an die Polymerisation zu einem Zeitpunkt, zu dem die Temperatur des Reaktionsmediums noch nicht oder noch nicht mehr als 20°C, bevorzugt nicht mehr als 10°C unter die Reaktionstemperatur am Ende der Polymerisation gefallen ist.

In einer Ausführungsform der Erfindung gibt man einen Teil der Lösemittel (L2), in der Regel mindestens 20 Gew.-%, bevorzugt mindestens 40 Gew.-% nach der Polymerisation zu.

In einer bevorzugten Ausführungsform der Erfindung gibt man einen Teil der Lösemittel (L2) während und einen Teil der Lösemittel (L2) nach der Polymerisation zu. In einer Ausführungsform der Erfindung gibt man 1 bis 40 Gew.-%, bevorzugt 5 bis 30 Gew.-% der insgesamt verwendeten Lösemittel L2 während der Polymerisation und den Rest nach der Polymerisation zu.

Die Zugabe der aromatischen Lösemittel (L2) während der Polymerisation kann beispielsweise so erfolgen, indem man die Polymerisationsinitiatoren in Lösemittel (L2) löst und die Lösung nach und nach zugibt.

Anstelle oder zusätzlich zu dieser Ausführungsform kann man einen Teil des Lösemittels (L2) nach Zugabe eines Teils des Initiators zugeben. Eine solche Zugabe kann beispielsweise nach Zugabe von 40 bis 70 % des Initiators erfolgen und es kann sich um 1 bis 40 Gew.-%, bevorzugt 5 bis 30 Gew.-% der Gesamtmenge an Lösemitteln (L2) handeln.

In einer weiteren bevorzugten Ausführungsform der Erfindung gibt man einen Teil der Lösemittel (L2) vor und einen Teil der Lösemittel (L2) nach der Polymerisation zu. In einer Ausführungsform der Erfindung gibt man 10 bis 60 Gew.-%, bevorzugt 40 bis 60 Gew.-% und beispielsweise ca. 50 Gew.-% der insgesamt verwendeten Lösemittel (L2) vor der Polymerisation und den Rest nach der Polymerisation zu.

Sofern man die Lösemittel (L2) vollständig oder zum Teil vor der Polymerisation zugibt, kann man vorteilhaft auf die Zugabe eines Molekulargewichtsreglers verzichten oder dessen Menge reduzieren. Bei dieser bevorzugten Ausführungsform der Erfindung beträgt die Menge des Molekulargewichtsreglers nicht mehr als 1,5 Gew.-%, bevorzugt nicht mehr als 1 Gew.-% und besonders bevorzugt nicht mehr als 0,5 Gew.-% bezüglich der Summe aller Monomere (A), und ganz besonders bevorzugt werden keine Molekulargewichtsregler zugegeben.

Das Gewichtsverhältnis der gesättigten, aliphatischen Lösemittel zu den aromatischen Lösemitteln L1 / L2 beträgt in der Regel 1:5 bis 2:1.

Die Konzentration der Monomere A in den Lösemitteln (L1) zu Beginn von Verfahrensschritt (II) wird vom Fachmann entsprechend den gewünschten Eigenschaften der herzustellenden Formulierung gewählt. In einer bevorzugten Ausführungsform der Erfindung beträgt die Konzentration 50 bis 85 Gew.-%. Ein solches Konzentrat hat den Vorteil, dass die Transportkosten vom Ort der Herstellung zum Einsatzort, beispielsweise einer Ölförderanlage niedrig gehalten werden können.

Die Menge der Lösemittel (L1) und (L2) zusammen wird ebenfalls je nach den gewünschten Eigenschaften gewählt. Sie wird in einer bevorzugten Ausführungsform so bemessen, dass die Konzentration aller hergestellten Polymere zusammen am Ende von Verfahrensschritt (II) 40 bis 50 Gew.-% bezüglich der Summe aller Komponenten der Lösung beträgt.

Mittels des beschriebenen Verfahrens ist eine polymere Zusammensetzung in einem Gemisch von Lösemitteln (L1) und (L2) erhältlich. Die Polymerisation der Monomere (A) in Gegenwart der Ethylen-Vinylester-Copolymere (B) verhindert, dass sich die Polymerkomponenten voneinander trennen. Das Ergebnis der Polymerisationsreaktion ist ein anderes, als wenn man die Monomere (A) -unter ansonsten gleichen Bedingungen- separat von den Ethylen-Vinylester-Copolymeren (B) polymerisiert und die Lösung des Polymers aus den Monomeren (A) und die Ethylen-Vinylester-Copolymere (B) nach der Polymerisation vereinigt. Derartige Lösungen können wieder separieren.

Ohne dass wir an eine bestimmte Theorie gebunden sein möchten, kann dieser Effekt so erklärt werden, dass im Zuge der Polymerisation die Monomere (A) zumindest zum Teil auf das Ethylen-Vinylester-Copolymer (B) aufpfropfen. Ein weiterer Teil der Monomere kann polymerisieren ohne aufzupfropfen. Hierdurch entstehen Ethylen-Vinylester-Pfropfcopolymere mit Monomere (A) umfassenden Seitengruppen und Monomere (A) umfassende Homo- oder Copolymere. Das teilweise Pfropfen verhindert in prinzipiell bekannter Art und Weise, dass sich die beiden Polymerkomponenten trennen. Es ist aber auch möglich, dass keine maßgebliche Pfropfung eintritt, sondern dass sich ein "interjacent complex" aus den Ethylen-Vinylester-Copolymeren (B) und den Homo- oder Copolymeren aus Monomeren (A) bildet. In einem solchen Komplex sind die Polymere überwiegend physikalisch gebunden und dennoch stabil, wie beispielsweise in US 7,001,903 B2 beschrieben.

### Formulierungen

Die erfindungsgemäße Polymerformulierung umfasst mindestens
- zwei verschiedene Lösemittel, sowie
- eine polymere Zusammensetzung erhältlich durch radikalische Polymerisation mindestens eines monoethylenisch ungesättigten Monomers (A) in Gegenwart mindestens eine Ethylen-Vinylester-Copolymers (B), wobei
   ▪ die Monomere (A) mindestens 70 Gew.-% -bezogen auf die Menge aller Monomere (A)- mindestens eines Alkyl(meth)acrylates (A1) der allgemeinen Formel H₂C=CR¹-COOR² umfassen, wobei R¹ für H oder eine Methylgruppe und R² für einen linearen Alkylrest mit 12 bis 60 Kohlenstoffatomen steht,
   ▪ die Ethylen-Vinylester-Copolymere (B) 55 bis 85 Gew.-% Ethylen sowie 15 bis 45 Gew.-% Vinylester der allgemeinen Formel H₂C=C-O-(O)C-R³ (III) umfasst, wobei R³ für H oder einen C₁- bis C₄ Kohlenwasserstoffrest steht, und
   ▪ die Menge der Monomere (A) 70 bis 90 Gew.-% und die der Ethylen-Vinylester-Copolymere (B) 10 bis 30 Gew.-% bezogen auf die Summe der Monomere (A) und der Ethylen-Vinylester-Copolymere (B) zusammen beträgt,
   wobei es sich bei den Lösemitteln mindestens um
- ein gesättigte aliphatische Kohlenwasserstoffgruppen umfassendes, unpolares Lösemittel (L1) mit einem Flammpunkt ≥ 60°C, und
- einen aromatischen Kohlenwasserstoff (L2) mit einem Flammpunkt ≥ 60°C handelt,

Bevorzugte Ausführungsformen, beispielsweise hinsichtlich der Art der Monomere (A), Copolymere (B), deren Mengen und Mischungsverhältnissen wurden bereits oben geschildert.

In einer bevorzugten Ausführungsform der Erfindung beträgt das Gewichtsverhältnis der aliphatischen Lösemittel zu den aromatischen Lösemitteln L1 / L2 1:5 bis 2:1.

In einer weiteren bevorzugten Ausführungsform der Erfindung beträgt die Konzentration aller Polymere zusammen 40 bis 50 Gew.-% bezüglich der Summe aller Bestandteile der Lösung.

In einer weiteren bevorzugten Ausführungsform der Erfindung ist die Polymerformulierung mittels des oben geschilderten Verfahrens erhältlich.

### Verwendung der Formulierungen als Pour-Point-Depressant

Die oben geschilderten Polymerformulierungen in Kohlenwasserstoffen (L1) und (L2), insbesondere die mittels des erfindungsgemäßen Verfahrens erhältlichen Polymerformulierungen können erfindungsgemäß als Pour-Point-Depressants für Rohöl, Mineralöl und/oder Mineralölprodukte verwendet werden, indem man dem Rohöl, dem Mineralöl und/oder den Mineralölprodukten mindestens eine der geschilderten Polymerformulierungen zusetzt. Daneben können selbstverständlich noch weitere Formulierungen, welche als Pour-Point-Depressants wirken, eingesetzt werden.

Pour-Point-Depressants verringern den Pour-Point von Rohölen, Mineralölen und/oder Mineralölprodukten. Als "Pour-Point" ("Fließgrenze") wird die niedrigste Temperatur bezeichnet, bei der eine Probe eines Öls beim Abkühlen gerade noch fließt. Für die Messung des Pour-Points werden standardisierte Messverfahren eingesetzt.

Zur erfindungsgemäßen Verwendung kann das oben genannte Konzentrat, beispielsweise ein Konzentrat mit einem Gesamt-Polymergehalt von 50 Gew.-% bis 80 Gew.-% als solches eingesetzt werden. Es kann aber auch noch mit weiterem Lösemittel verdünnt werden, bevorzugt mit Lösemitteln (L1) und/oder (L2) und/oder mit weiteren Komponenten formuliert werden. Beispielsweise kann man der Formulierung zusätzliche Wachs-Dispergatoren zusetzen. Wachs-Dispergatoren stabilisieren gebildete Paraffin-Kristalle und verhindern, dass diese sedimentieren. Als Wachs-Dispergatoren können beispielsweise Alkylphenole, Alkylphenol-FormaldehydHarze oder Dodecylbenzolsulfonsäure eingesetzt werden. Die Konzentration einer einsatzfähigen Formulierung kann beispielsweise 20 bis 50 Gew.-%, bevorzugt 25 bis 40 Gew.-% an erfindungsgemäß hergestellten Polymeren sowie optional weiteren Komponenten mit Ausnahme der Lösemittel betragen, wobei sich diese Angabe auf die Gesamtmenge aller Komponenten einschließlich der Lösemittel bezieht. Während die Herstellung der erfindungsgemäßen Formulierungen naturgemäß üblicherweise in einer Chemieanlage erfolgt, kann die Herstellung der einsatzfertigen Formulierung vorteilhaft vor Ort erfolgen, also beispielsweise direkt an einer Förderstelle für Öl.

Die erfindungsgemäße Verwendung erfolgt, indem man die erfindungsgemäßen, optional weitere Komponenten enthaltenden Formulierungen und/oder verdünnten Formulierungen dem Rohöl, dem Mineralöl und/oder den Mineralölprodukten, bevorzugt dem Rohöl zusetzt.

Die Formulierungen werden üblicherweise in einer solchen Menge eingesetzt, dass die zugesetzte Menge der polymeren Zusammensetzung 50 bis 1500 ppm bzgl. des Öls beträgt. Bevorzugt beträgt die Menge 100 bis 1000 ppm, besonders bevorzugt 250 bis 600 ppm und beispielsweise 300 bis 600 ppm. Die Mengen beziehen sich auf die polymere Zusammensetzung selbst ohne Berücksichtigung der Lösemittel (L1) und (L2) sowie optional weiterer Komponenten der Formulierung.

In einer bevorzugten Ausführungsform der Erfindung handelt es sich um Rohöl und man injiziert die Formulierung in eine Rohölpipeline. Bevorzugt kann die Injektion auf dem Ölfeld erfolgen, d.h. am Beginn der Rohölpipeline, aber die Injektion kann selbstverständlich auch an einem anderen Ort erfolgen. Insbesondere kann es sich um eine Pipeline handeln, welche von einer Offshore-Plattform ans Festland führt. Explosionsschutz ist auf Offshore-Plattformen und in Raffinerien besonders wichtig, und dementsprechend vereinfachen die erfindungsgemäßen Formulierungen auf Basis von Lösemitteln mit einem Flammpunkt ≥ 60°C die Handhabung ganz erheblich. Weiterhin erfolgt die Abkühlung von Rohöl in Pipelines, welche unter Wasser von einer Offshore-Plattform an Land führen, naturgemäß besonders schnell, insbesondere, wenn es sich um Pipelines in kalten Gewässern handelt, beispielsweise mit einer Wassertemperatur von weniger als 10°C.

In einer weiteren bevorzugten Ausführungsform der Erfindung handelt es sich um Rohöl und man injiziert die Formulierung in eine Produktionsbohrung. Auch hier kann es sich insbesondere um eine auf eine Offshore-Plattform führende Produktionsbohrung handeln. Die Injektion erfolgt bevorzugt etwa an der Stelle, an der Öl aus der Formation in die Produktionsbohrung einfließt. Auf diese Art und Weise kann man das Erstarren des Rohöls in der Produktionsbohrung oder eine zu starke Erhöhung von dessen Viskosität verhindern.

### Weitere Verwendungen der Formulierungen

Die erfindungsgemäße Formulierung kann selbstverständlich auch zu anderen Zwecken verwendet werden.

In einer weiteren Ausführungsform der Erfindung werden die oben geschilderten Polymerformulierungen in Kohlenwasserstoffen (L1) und (L2), insbesondere die mittels des erfindungsgemäßen Verfahrens erhältlichen Polymerformulierungen zur Vermeidung von Wachsablagerungen auf Oberflächen, welche in Kontakt mit Rohöl, Mineralöl und/oder Mineralölprodukten sind, verwendet. Die Verwendung erfolgt, indem man dem Rohöl, Mineralöl und/oder den Mineralölprodukten mindestens eine der der geschilderten Polymerformulierungen zusetzt. Bevorzugte Formulierungen wurden bereits genannt und auch die Art des Einsatzes ist analog zu der Verwendung als Pour-Point-Depressant. Daneben können selbstverständlich noch weitere Formulierungen, welche als Wachs-Inhibitoren wirken, eingesetzt werden.

Die folgenden Beispiele sollen die Erfindung näher illustrieren:

### A Herstellung der verwendeten Polymerformulierungen

In den Beispielen werden die Polymerformulierungen in einem zweistufigen Verfahren hergestellt. In der ersten Stufe wird Acrylsäure mit dem gewünschten Alkohol in einem Lösemittel verestert. In der zweiten Stufe wird die erhaltene Lösung der Acrylsäurealkylester ohne weitere Reinigung eingesetzt und mit einem Ethylen-Vinylacetat-Copolymer zu einem Pfropfcopolymer umgesetzt, bei dem die Polyacrylate zumindest teilweise auf das Ethylen-Vinylacetat-Copolymer aufgepfropft sind. Das erhaltene Produkt kann neben dem Pfropfcopolymer auch noch nicht aufgepfropfte Polyacrylate enthalten. Die Produkte bleiben zur Verwendung in den Lösungsmitteln gelöst, in denen sie bei der Synthese gelöst waren.

**Eingesetzte Ausgangsmaterialien:**

| | |
|---|---|
| Shellsol^{®} D70 | Hochsiedendes aliphatisches Kohlenwasserstoffgemisch der Firma Shell Chemicals, im Wesentlichen aus C₁₁- bis C₁₄-Aliphaten (ca. 60% Paraffine, ca. 40 % Cycloparaffine, Aromatenanteil < 100 ppm), Siedebeginn (Initial Boiling Point) nach ASTM D 86 198°C, Flammpunkt nach ASTM D93 74°C |
| Solvesso^{®} 150 | Hochsiedendes aromatisches Kohlenwasserstoffgemisch der Firma ExxonMobil Chemical Company, Aromatengehalt > 99 Vol. %, Siedebeginn (Initial Boiling Point) 181°C, Flammpunkt nach ASTM D93 66°C |
| Solvesso^{®} 150 ND | Hochsiedendes aromatisches Kohlenwasserstoffgemisch der Firma ExxonMobil Chemical Company, Aromatengehalt > 99 Vol. %, Siedebeginn (Initial Boiling Point) 184°C, Flammpunkt nach ASTM D93 65°C |
| Ethylen-Vinylacetat-Copolymer | Ethylen-Vinylacetat-Copolymer aus 67 Gew.-% Ethylen und 33 Gew.-% Vinylacetat, Schmelzflussindex 21 g/10 min (gemessen nach ASTM D 1238), Mₙ ca. 34000 g/mol, M_{w} ca. 134000 g/mol. |
| Nafol^{®} 1822 | Mischung linearer aliphatischer Alkohole der Firma Sasol (C₁₆ ≤ 1 Gew.-%, C₁₈ 43 +/- 2 Gew.-%, C₂₀ 11 +/- 2 Gew.-%, C₂₂ 44 +/- 2 Gew.-%, C₂₄ ≤ 1 Gew.-%) |
| Hydrenol^{®} D | Talgfettalkohol, Mischung linearer aliphatischer Alkohole der Firma Sasol (< C₁₆ 0 -bis 0,6 Gew.-%, C₁₆ 30 +/- 5 Gew.-% C₁₈, C₁₈ 65 +/- 2 Gew.-%, > C₁₈ 0 bis 3 Gew.-%). |
| Wako V-601 | Dimethyl-2,2'-azoisobutyrat, 10 h - Halbwertszeit ca. 66°C (in Toluol) |

### Polymer 1

### 1. Stufe

In einem Reaktor mit Rührer, Wasserauskreiser, Intensivkühler und Gaseinleitungsrohr werden 1888,2 g Talgfettalkohol C_{16/18} (Hydrenol^{®} D), 5,6 g p-Toluolsulfonsäure, 3,6 g 4-Methoxyphenol und 541,1 g eines kommerziell erhältlichen, hochsiedenden aliphatischen Lösemittelgemisches (Shellsol^{®} D70) vorgelegt. Der Wasserauskreiser wird mit 35 g Shellsol^{®} D70 befüllt. Das Reaktionsgemisch wird mit Magerluft (6 % O₂) gespült und unter Rühren (50 U/min) wird auf 80 °C geheizt, um den Talgfettalkohol C16/18 zu lösen. Nach Erhöhung der Umdrehungszahl auf 250 U/min werden 519,1 g Acrylsäure zudosiert und die Temperatur auf maximal 165 °C erhöht, so dass entstehendes Reaktionswasser abdestilliert werden kann. Nach 8 bis 10 h wird die Reaktion beendet. Es wird eine Lösung von 1-Hexadecylacrylat und 1-Octadecylacrylat in Shellsol^{®} D70 erhalten (Konzentration 80 Gew.-% Acrylate).

### 2. Stufe

In einem Vierhalskolben mit Teflonrührer, Intensivkühler und Dosimat werden 424,5 g der Monomer-Lösung (80 Gew.-% Acrylate) unter Rühren (300 U/min) und N₂-Überlagerung auf 75 °C erwärmt und 84,0 g des oben genannten Ethylen-Vinylacetat-Copolymers zugegeben und gelöst. Dann werden 9,2 g Shellsol^{®} D70 zugegeben. Nach Zugabe von 6,9 g Allylalkohol werden 1,8 g des Initiators Dimethyl-2,2'-azoisobutyrat (Wako V-601) gelöst in 29,5 g eines hochsiedenden aliphatischen Lösemittels (Shellsol^{®} D70) bei einer Innentemperatur von 72 °C über 3 Stunden zudosiert. Um dem Anstieg der Viskosität und dem Anstieg der Temperatur entgegenzuwirken wurde nach der Zugabe der Hälfte des Initiators mit 50,0 g Solvesso^{®} 150 ND verdünnt. Nach 2,5 Stunden Nachpolymerisation bei 72 °C wird mit 270,1 g Solvesso^{®} 150 ND verdünnt und 30 min gerührt, bevor über ein 400 µm-Schnellsieb filtriert wird.

Es wird eine Lösung erhalten, welche 50 Gew.-% Pfropfcopolymere (ca. 20 Gew.-% Ethylen-Vinylacetat-Copolymer und ca. 80 Gew.-% Polyacrylat, jeweils bezogen auf das Propfcopolymer), 10 Gew.-% hochsiedendes aliphatisches Lösemittel mit einem Flammpunkt von 74°C (Shellsol^{®} D70) und 40 Gew.-% hochsiedendes aromatisches Lösemittel (Solvesso^{®} 150 ND) mit einem Flammpunkt von 65°C enthält.

### Polymer 2

### 1. Stufe

In einem Reaktor mit Rührer, Wasserauskreiser, Intensivkühler und Gaseinleitungsrohr werden 575,8 g eines C18/C20/C22-Gemisches aliphatischer, linearer Alkohole (Nafol^{®} 1822), 2,2 g p-Toluolsulfonsäure, 1,5 g 4-Methoxyphenol und 177,2 g eines hochsiedenden aliphatischen Kohlenwasserstoffgemisches (Shellsol® D70) vorgelegt. Der Wasserauskreiser wird mit 31 g Shellsol® D70 befüllt. Das Reaktionsgemisch wird mit Magerluft (6 % O₂) gespült und unter Rühren (50 U/min) wird auf 80 °C geheizt, um den aliphatischen Alkohol zu lösen. Nach Erhöhung der Umdrehungszahl auf 200 U/min werden 135,5 g Acrylsäure zudosiert und die Temperatur auf maximal 160 °C erhöht, so dass entstehendes Reaktionswasser abdestilliert werden kann. Nach 6 h werden weitere 363,4 g Shellsol^{®} D70 zugegeben und die Reaktion beendet. Es wird eine Lösung von Alkylacrylaten mit C18/C20/C22 Alkylresten in Shellsol^{®} D70 erhalten (Konzentration 55 Gew.-% Acrylate).

### 2. Stufe

In einem Vierhalskolben mit Teflonrührer, Intensivkühler und Dosimat werden 1224,0 g der Monomer-Lösung (55 Gew.-% Acrylate) unter Rühren (300 U/min) und N₂-Überlagerung auf 75 °C erwärmt und 166,1 g des oben genannten Ethylen-Vinylacetat-Copolymers zugegeben und gelöst. Dann werden 8 g Shellsol^{®} D70 zugegeben. Nach Zugabe von 20,37 g Allylalkohol werden 2,9 g des Initiators Dimethyl-2,2'-azoisobutyrat (Wako V-601) gelöst in 78,4 g eines hochsiedenden aliphatischen Lösemittels (Shellsol^{®} D70) bei einer Innentemperatur von 77-82 °C über 4 Stunden zudosiert. Nach 2,5 Stunden Nachpolymerisation bei 78 - 87 °C wird mit 265,7 g Solvesso^{®} 150 ND verdünnt und auf 40 °C abgekühlt, bevor 1,1 g Triethanolamin zugesetzt und weitere 30 min gerührt werden. Zuletzt wird über ein 400 µm-Schnellsieb filtriert.

Es wird eine Lösung erhalten, welche 49 Gew.-% Pfropfcopolymere (ca. 20 Gew.-% Ethylen-Vinylacetat-Copolymer und ca. 80 Gew.-% Polyacrylat, jeweils bezogen auf das Propfcopolymer), 32 Gew.-% hochsiedendes aliphatisches Lösemittel mit einem Flammpunkt von 74°C (Shellsol® D70) und 19 Gew.-% hochsiedendes aromatisches Lösemittel (Solvesso® 150 ND) mit einem Flammpunkt von 65°C enthält.

Weitere Polymer-Formulierungen wurden durch Variation der obigen Versuchsbedingungen erhalten:
- Formulierung V1: Es wurde wie in Beispiel 1 vorgegangen, nur wurde anstelle der Lösemittel Shellsol^{®} D70 und Solvesso^{®} 150 ND jeweils Toluol (Flammpunkt 6°C) als Lösemittel eingesetzt.
- Formulierung V2: Es wurde wie in Beispiel 2 vorgegangen, nur wurde anstelle der Lösemittel Shellsol^{®} D70 und Solvesso^{®} 150 ND jeweils Toluol (Flammpunkt 6°C) als Lösemittel eingesetzt.
- Formulierung V3: Es wurde wie in Beispiel 1 vorgegangen, nur wurde ausschließlich das Lösemittel Solvesso^{®} 150 ND eingesetzt.
- Formulierung V4: Es wurde wie in Beispiel 2 vorgegangen, nur wurde ausschließlich das Lösemittel Solvesso^{®} 150 ND eingesetzt.
- Formulierung V5: Es wurde wie in Beispiel 1 vorgegangen, nur ausschließlich das Lösemittel Solvesso^{®} 150 ND eingesetzt. Außerdem wurde die Konzentration der Acrylate während der Polymerisation erhöht (Einsatz einer Lösung mit 80 Gew.-% Monomeren anstelle von 50 Gew. % Monomeren wie in Beispiel 1 bzw. in V6). Konzentration der erhaltenen Pfropfcopolymerlösung: 49,4 Gew %.

### Weitere Polymerformulierungen (Forts.)

- Formulierung V6: Es wurde wie in Beispiel 2 vorgegangen, nur wurde ausschließlich das Lösemittel Solvesso^{®} 150 ND eingesetzt. Außerdem wurde die Konzentration der Acrylate während der Polymerisation erhöht (Einsatz einer Lösung mit 79 Gew.-% Monomeren anstelle von 37 Gew.-% Monomeren). Konzentration der erhaltenen Pfropfcopolymerlösung: 49,4 Gew.-%.
- Formulierung V7: Es wurde wie in Beispiel 1 vorgegangen, nur wurde als Lösemittel ausschließlich Shellsol^{®} D70 eingesetzt.
- Formulierung V8: Es wurde wie in Beispiel 2 vorgegangen, nur wurde als Lösemittel ausschließlich Shellsol^{®} D70 eingesetzt.

### B Test der Eigenschaften der erhaltenen Copolymerformulierungen

Mit den erhaltenen Lösungen der Copolymere wurden jeweils die folgenden Tests durchgeführt:

### Bestimmung der K-Werte der Copolymere

Von den erhaltenen Copolymeren wurden die K-Werte (gemessen nach H. Fikentscher, Cellulosechemie Band 13, Seiten 58 bis 64 und 71 bis 74 (1932)) in 2 %iger (Gew./Vol.) toluolischer Lösung bestimmt. Die Werte sind in den Tabellen 1 bis 3 zusammengestellt.

### Molekulargewichtsbestimmung

Es wurde jeweils das zahlenmittlere Molekulargewicht Mₙ und das gewichtsmittlere Molekulargewicht M_{w} der erhaltenen Copolymere mittels Gelpermeationschromatographie in Tetrahydrofuran als Lösemittel bestimmt. Die Werte sind in den Tabellen 1 bis 3 zusammengestellt.

### Bestimmung der Viskosität:

Es wurde jeweils die kinematische Viskosität der in den oben beschriebenen Versuchen erhaltenen Lösungen der Pfropfcopolymere mit einem Ubbelohde-Viskosimeter bei 50°C gemessen. Die Werte sind in den Tabellen 1 bis 3 zusammengestellt.

### Beurteilung der Stabilität

Es wurde jeweils die Stabilität der Polymerlösung untersucht, und zwar im Hinblick darauf, ob eine langfristig stabile Lösung erhalten bleibt, welche nicht zur Phasentrennung neigt. Hierzu wurden die hergestellten Formulierungen nach der Synthese bei Raumtemperatur gelagert. Zeigt sich innerhalb von 24 h nach Beginn der Lagerung eine erkennbare Phasentrennung, dann ist die Bewertung negativ (-), ansonsten (+). Die Werte sind in den Tabellen 1 bis 3 zusammengestellt.

### Bestimmung des Pour-Points

Die Bestimmung des Pour-Points wurde gemäß ASTM D 5853 "Standard Test Method for Pour Point of Crude Oils" durchgeführt. Der Pour-Point ist die minimale Temperatur, bei der eine Probe eines getesteten Öls gerade noch fließfähig ist. Gemäß der ASTM D 5853 wird hierzu eine Probe des Öls in Schritten von jeweils 3°C abgekühlt und nach jedem Schritt jeweils die Fließfähigkeit getestet. Für die Tests wurde ein Rohöl aus dem Ölfeld "Landau" in Südwestdeutschland (Firma Wintershall Holding GmbH) mit einem API-Grad von 37 und einem Pour-Point von 27°C verwendet. Zur Bestimmung der Erniedrigung des Pour-Points wurden die zu testenden Propfcopolymere dem Öl in einer Konzentration von 100 ppm, 300 ppm oder 1500 ppm, jeweils Polymer bezogen auf das Rohöl eingesetzt. Die Werte sind in den Tabellen 1 bis 3 zusammengestellt. Von manchen Proben wurden Doppel- oder Dreifachbestimmungen durchgeführt. In diesen Fällen sind in der Tabelle alle Werte angegeben.

**Tabelle 1: Erfindungsgemäße Beispiele**

| **Formulierung Nr.** | **Acrylate** | **Viskosität bei 50°C [mm²/s]** | **Mₙ** | **M_{w}/Mₙ** | **K-Wert** | **Stabilität der Lösung bei RT** | **Pour-Point [°C]** | | | **Kommentare** |
|---|---|---|---|---|---|---|---|---|---|---|
| | | | **M_{w}** | | | | **Menge der Additive** | | | |
| | | | **[g/mol]** | | | | 100 ppm | 300 ppm | 1500 ppm | |
| 1 | C16/C18 | 305 | 2450 | 29,3 | 38,8 | + Trüb, stabil und flüssig | 3/6/6 | 3/0/3 | 6/9/9 | Verwendung von aliphatischen Kohlenwasserstoffen L1 und aromatischen Kohlenwasserstoffen L2 mit Flammpunkt > 60°C |
| | | | 71900 | | | | | | | |
| 2 | C18/C20/C22 | 151 | 2230 | 25,6 | 34,8 | + Stabil und fest | 6/6/9 | 3/0/3 | 9/6/6 | Verwendung von aliphatischen Kohlenwasserstoffen L1 und aromatischen Kohlenwasserstoffen L2 mit Flammpunkt > 60°C |
| | | | 57000 | | | | | | | |

**Tabelle 2: Vergleichsbeispiele**

| **Formulierung Nr.** | **Acrylate** | **Viskosität bei 50°C [mm²/s]** | **Mₙ** | **M_{w}/Mₙ** | **K-Wert** | **Stabilität der Lösung bei RT** | **Pour-Point [°C]** | | | **Kommentare** |
|---|---|---|---|---|---|---|---|---|---|---|
| | | | **M_{w}** | | | | **Menge der Additive** | | | |
| | | | **[g/mol]** | | | | 100 ppm | 300 ppm | 1500 ppm | |
| V1 | C16/C18 | 253 | 4610 | 16,1 | 40,4 | + Trüb, flüssig | 9/9 | 6/6 | 9/9* | Toluol als Lösemittel, Flammpunkt 6°C |
| | | | 74400 | | | | | | | |
| V2 | C18/C20/C22 | 148 | 3680 | 16,3 | 36,3 | + Trüb, fest | 12/9 | 6/9 | 9/9* | Toluol als Lösemittel , Flammpunkt 6°C |
| | | | 60000 | | | | | | | |
| V3 | C16/C18 | 70 | 1620 | 24,3 | 35,6 | Inhomogen | n.b. | n.b. | n.b. | Nur aromatische Kohlenwasserstoffe L2 mit Flammpunkt > 60°C, deutlich niedrigeres Molekulargewicht, unzureichende Stabilität |
| | | | 39400 | | | | | | | |
| V4 | C18/C20/C22 | 73 | 1680 | 25,4 | 32,4 | - Wachsartig, fest | 12/15 | 9/9 | 3/6 | Nur aromatische Kohlenwasserstoffe L2 mit Flammpunkt > 60°C, deutlich niedrigeres Molekulargewicht, Formulierung ist fest, |
| | | | 42700 | | | | | | | |
| V5 | C16/C18 | 156 | 1570 | 22,4 | 34,4 | - zweiphasig | n.b. | n.b. | n.b. | Polymerisation in höherer Konzentration Nur aromatische Kohlenwasserstoffe L2 mit Flammpunkt > 60°C, deutlich niedrigeres Molekulargewicht, unzureichende Stabilität |
| | | | 35200 | | | | | | | |
| V6 | C18/C20/C22 | 162 | 2040 | 27,5 | 34,1 | - Trüb, wachsartig fest | 6/9 | 6/9 | 18/15 | Polymerisation in höherer Konzentration Nur aromatische Kohlenwasserstoffe L2 mit Flammpunkt > 60°C, Formulierung ist fest |
| | | | 56200 | | | | | | | |

| | | | | | | | | | | |
|---|---|---|---|---|---|---|---|---|---|---|
| *gemessen bei 1000 ppm | | | | | | | | | | |

**Tabelle 3: Vergleichsbeispiele**

| **Formulierung Nr.** | **Acrylate** | **Viskosität bei 50°C [mm²/s]** | **Mₙ** | **M_{w}/Mₙ** | **K-Wert** | **Stabilität der Lösung bei RT** | **Pour-Point [°C]** | | | **Kommentare** |
|---|---|---|---|---|---|---|---|---|---|---|
| | | | **M_{w}** | | | | **Menge der Additive** | | | |
| | | | **[g/mol]** | | | | 100 ppm | 300 ppm | 1500 ppm | |
| V7 | C16/C18 | 184 | 2630 | 25,3 | 40 | - Fest | n.b. | n.b. | n.b. | Nur aliphatische Kohlenwasserstoffe L1 mit Flammpunkt > 60°C, festes Produkt |
| | | | 66600 | | | | | | | |
| V8 | C18/C20/C22 | 120 | 1380 | 34,8 | 33,4 | Wachsartig, fest | 12/12 | 6/6 | 6/6 | Nur aliphatische Kohlenwasserstoffe L1 mit Flammpunkt > 60°C, festes Produkt |
| | | | 48100 | | | | | | | |

Die Beispiele und Vergleichsbeispiele zeigen die Vorteile des erfindungsgemäßen Verfahrens. V1 (mit C16/C18-Acrylaten) und V2 (mit C18/C20/C22-Acrylaten) sind Produkte gemäß Stand der Technik, welche in Toluol (Flammpunkt 6°C) hergestellt wurden. Das Produkt mit C_{16/18} Acrylaten ist flüssig, und beide Produkte sind stabil. Der Pour-Point des Testöls (27°C) wird durch die Formulierung V1 je nach Menge auf 6 bis 9°C und durch die Formulierung V2 auf 6 bis 9°C verringert.

Die mittels des erfindungsgemäßen Verfahrens erhaltenen Formulierungen 1 (mit C16/C18-Acrylaten) und 2 (mit C18/C20/C22-Acrylaten), welche unter Verwendung der Lösemittel L1 und L2 hergestellt wurden, sind ebenfalls stabil und führen beim Test sogar zu etwas niedrigeren Pour-Points (jeweils 0°C bis 9°C). Überraschend ist dabei die Konzentrationsabhängigkeit der Verringerung des Pour-Points, und zwar zeigen die Versuche sowohl für V1 wie für V2 ein Minimum von nur 0°C bis 3°C bei 300 ppm, während bei V1 bei 100 ppm 3°C bis 6°C und bei 1500 ppm 6°C bis 9°C und bei V2 sowohl bei 100 ppm als auch 1500 ppm jeweils 6 bis 9°C gemessen werden.

Ersetzt man Toluol als Lösemittel (Siedepunkt 111°C, Flammpunkt 6°C) ausschließlich durch aromatische Lösemittel mit einem Flammpunkt > 60°C (V3, V4, V5, V6), so beeinflusst diese Wahl des Lösemittels deutlich den Verlauf der Polymerisation. Sowohl das zahlenmittlere Molekulargewicht Mₙ als auch das gewichtsmittlere Molekulargewicht M_{w} der Polymere nimmt im Vergleich zu den entsprechenden Versuchen in Toluol ab und die Uneinheitlichkeit nimmt zu. Die erhaltenen Formulierungen weisen keine ausreichende Stabilität mehr auf und sind entweder zweiphasig oder wachsartig fest. Außerdem ist die Erniedrigung des Pour-Points nicht mehr in allen Konzentrationsbereichen so gut wie bei den Produkten in Toluol.

Ersetzt man Toluol als Lösemittel ausschließlich durch aliphatische Lösemittel mit einem Flammpunkt > 60°C (V7, V8) so werden feste oder wachsartig feste Produkte erhalten, welche zur Anwendung aufgeschmolzen werden müssen. Die Erniedrigung des Pour-Points ist geringer als bei den erfindungsgemäßen Versuchen mit einer Mischung aus den Lösemitteln (L1) und (L2).

## Patentansprüche

1. Verfahren zur Herstellung einer Polymerformulierung mindestens umfassend
• zwei verschiedene Lösemittel, sowie
• eine polymere Zusammensetzung erhältlich durch radikalische Polymerisation mindestens eines monoethylenisch ungesättigten Monomers (A) in Gegenwart mindestens eines Ethylen-Vinylester-Copolymers (B), wobei
▪ die Monomere (A) mindestens 70 Gew.-% -bezogen auf die Menge aller Monomere (A)- mindestens eines Alkyl(meth)acrylates (A1) der allgemeinen Formel H₂C=CR¹-COOR² umfassen, wobei R¹ für H oder eine Methylgruppe und R² für einen linearen Alkylrest mit 12 bis 60 Kohlenstoffatomen steht,
▪ die Ethylen-Vinylester-Copolymere (B) 55 bis 85 Gew.-% Ethylen sowie 15 bis 45 Gew.-% Vinylester der allgemeinen Formel H₂C=CH-O-(O)C-R³ (III) umfassen, wobei R³ für H oder einen C₁- bis C₄ Kohlenwasserstoffrest steht, und
▪ die Menge der Monomere (A) 70 bis 90 Gew.-% und die der Ethylen-Vinylester-Copolymere (B) 10 bis 30 Gew.-% bezogen auf die Summe der Monomere (A) und der Ethylen-Vinylester-Copolymere (B) zusammen beträgt,
**dadurch gekennzeichnet, dass** es sich bei den Lösemitteln mindestens um
• ein gesättigte aliphatische Kohlenwasserstoffgruppen umfassendes, unpolares Lösemittel (L1) mit einem Flammpunkt ≥ 60°C, und
• einen aromatischen Kohlenwasserstoff (L2) mit einem Flammpunkt ≥ 60°C handelt, und das Verfahren mindestens die folgenden Verfahrensschritte umfasst:
(I) Bereitstellen einer Lösung mindestens umfassend Monomere (A), sowie Ethylen-Vinylester-Copolymere (B) jeweils in den oben genannten Mengen in mindestens einem Lösemittel (L1), sowie
(II) radikalische Polymerisation der Monomere (A) in Gegenwart der Ethylen-Vinylester-Copolymere (B) durch Zugabe mindestens eines thermisch zerfallenden Initiators für die radikalische Polymerisation zu der gemäß (I) erhaltenen Lösung und Polymerisation bei einer Temperatur von mindestens 50°C, wobei man das Reaktionsmedium vor und/oder während und/oder nach der Polymerisation mit Lösemitteln (L2) verdünnt,
wobei man die Menge der Lösemittel (L1) und (L2) so bemisst, dass die Konzentration aller hergestellten Polymere zusammen am Ende von Verfahrensschritt (II) 35 bis 55 Gew.-% bezüglich der Summe aller Komponenten der Lösung beträgt.

2. Verfahren gemäß Anspruch 1, **dadurch gekennzeichnet, dass** es bei dem Lösemittel (L1) um gesättigte aliphatische Kohlenwasserstoffe mit einem Flammpunkt ≥ 60°C handelt.

3. Verfahren gemäß Anspruch 2, **dadurch gekennzeichnet, dass** Verfahrensschritt (I) mindestens die folgenden Teilschritte umfasst:
(Ia) Herstellung einer Lösung umfassend mindestens Alkyl(meth)acrylate (A1) in mindestens einem aliphatischen Kohlenwasserstoff als Lösemittel (L1) durch Veresterung mindestens eines Alkohols der allgemeinen Formel R²-OH mit (Meth)acrylsäure H₂C=CR¹-COOH in Gegenwart von Lösemitteln (L1), sowie
(Ib) Vermischen der in Verfahrensschritt (la) erhaltenen Lösung mit mindestens einem Ethylen-Vinylester-Copolymer (B) sowie optional weiteren, von (A1) verschiedenen Monomeren (A).

4. Verfahren gemäß einem der Ansprüche 1 bis 3, **dadurch gekennzeichnet, dass** man einen Teil der Lösemittel (L2) während und einen Teil der Lösemittel (L2) nach der Polymerisation zugibt.

5. Verfahren gemäß einem der Ansprüche 1 bis 3, **dadurch gekennzeichnet, dass** man einen Teil der Lösemittel (L2) vor und einen Teil der Lösemittel (L2) nach der Polymerisation zugibt.

6. Verfahren gemäß einem der Ansprüche 1 bis 5, **dadurch gekennzeichnet, dass** das Gewichtsverhältnis der Lösemittel L1/L2 1:5 bis 2:1 beträgt.

7. Verfahren gemäß einem der Ansprüche 1 bis 6, **dadurch gekennzeichnet, dass** die Konzentration der Monomere (A) in den Lösemitteln (L1) zu Beginn von Verfahrensschritt (II) 50 bis 85 Gew.-% beträgt.

8. Verfahren gemäß einem der Ansprüche 1 bis 7, **dadurch gekennzeichnet, dass** man die Menge der Lösemittel (L1) und (L2) so bemisst, dass die Konzentration aller hergestellten Polymere zusammen am Ende von Verfahrensschritt (II) 40 bis 50 Gew.-% bezüglich der Summe aller Komponenten der Lösung beträgt.

9. Verfahren gemäß einem der Ansprüche 1 bis 8, **dadurch gekennzeichnet, dass** das mittlere Molekulargewicht M_{w} der eingesetzten Ethylen-Vinylester-Copolymere mindestens 30000 g/mol beträgt.

10. Verfahren gemäß einem der Ansprüche 1 bis 9, **dadurch gekennzeichnet, dass** die Ethylen-Vinylester-Copolymere (B) 55 bis 75 Gew.-% Ethylen sowie 25 bis 45 Gew.-% Vinylester umfassen.

11. Verfahren gemäß einem der Ansprüche 1 bis 9, **dadurch gekennzeichnet, dass** die Ethylen-Vinylester-Copolymere (B) 60 bis 70 Gew.-% Ethylen sowie 30 bis 40 Gew.-% Vinylester umfassen.

12. Verfahren gemäß einem der Ansprüche 1 bis 11, **dadurch gekennzeichnet, dass** R³ für einen Methylrest steht.

13. Verfahren gemäß einem der Ansprüche 1 bis 12, **dadurch gekennzeichnet, dass** R² für einen linearen Alkylrest mit 16 bis 30 Kohlenstoffatomen steht.

14. Verfahren gemäß einem der Ansprüche 1 bis 12, **dadurch gekennzeichnet, dass** R² für einen linearen Alkylrest mit 18 bis 24 Kohlenstoffatomen steht.

15. Verfahren gemäß einem der Ansprüche 1 bis 14, **dadurch gekennzeichnet, dass** die Menge der Monomere (A) 75 bis 85 Gew.-% und die der Ethylen-Vinylester-Copolymere (B) 15 bis 25 Gew.-% bezogen auf die Summe aus Monomeren (A) und Ethylen-Vinylester-Copolymeren (B) beträgt.

16. Verfahren gemäß einem der Ansprüche 1 bis 15, **dadurch gekennzeichnet, dass** als Monomere (A) neben den Monomeren (A1) davon verschiedene (Meth)acrylate (A2) der allgemeinen Formel H₂C=CR¹-COOR⁴ eingesetzt werden, wobei R¹ für H oder Methyl und R⁴ für einen Kohlenwasserstoffrest ausgewählt aus der Gruppe von Resten R^{4a}, R^{4b}, R^{4c} und R^{4d} steht und die Reste wie folgt definiert sind:
R^{4a}: Lineare Alkylreste mit 1 bis 11 Kohlenstoffatomen,
R^{4b}: Verzweigte Alkylresten mit 4 bis 60 Kohlenstoffatomen,
R^{4c}: Unsubstituierte oder alkylsubstituierte gesättigte, cyclische Kohlenwasserstoff reste mit 5 bis 30 Kohlenstoffatomen, oder
R^{4d}: Unsubstituierte oder alkylsubstituierte aromatische Kohlenwasserstoffreste mit 6 bis 30 Kohlenstoffatomen.

17. Verfahren gemäß einem der Ansprüche 1 bis 15, **dadurch gekennzeichnet, dass** als Monomere (A) ausschließlich Alkyl(meth)acrylate (A1) eingesetzt werden.

18. Polymerformulierung mindestens umfassend
• zwei verschiedene Lösemittel, sowie
• eine polymere Zusammensetzung erhältlich durch radikalische Polymerisation mindestens eines monoethylenisch ungesättigten Monomers (A) in Gegenwart mindestens eines Ethylen-Vinylester-Copolymers (B), wobei
▪ die Monomere (A) mindestens 70 Gew.-% -bezogen auf die Menge aller Monomere (A)- mindestens eines Alkyl(meth)acrylates (A1) der allgemeinen Formel H₂C=CR¹-COOR² umfassen, wobei R¹ für H oder eine Methylgruppe und R² für einen linearen Alkylrest mit 12 bis 60 Kohlenstoffatomen steht,
▪ die Ethylen-Vinylester-Copolymere (B) 55 bis 85 Gew.-% Ethylen sowie 15 bis 45 Gew.-% Vinylester der allgemeinen Formel H₂C=CH-O-(O)C-R³ (III) umfassen, wobei R³ für H oder einen C₁- bis C₄ Kohlenwasserstoffrest steht, und
▪ die Menge der Monomere (A) 70 bis 90 Gew.-% und die der Ethylen-Vinylester-Copolymere (B) 10 bis 30 Gew.-% bezogen auf die Summe der Monomere (A) und der Ethylen-Vinylester-Copolymere (B) zusammen beträgt,
**dadurch gekennzeichnet, dass** es sich bei den Lösemitteln mindestens um
• ein gesättigte aliphatische Kohlenwasserstoffgruppen umfassendes, unpolares Lösemittel (L1) mit einem Flammpunkt ≥ 60°C, und
• einen aromatischen Kohlenwasserstoff (L2) mit einem Flammpunkt ≥ 60°C handelt, wobei die Konzentration aller Polymere zusammen 35 bis 55 Gew.-% bezüglich der Summe aller Bestandteile der Formulierung beträgt.

19. Formulierung gemäß Anspruch 18, **dadurch gekennzeichnet, dass** es bei dem Lösemittel (L1) um gesättigte aliphatische Kohlenwasserstoffe mit einem Flammpunkt ≥ 60°C handelt.

20. Formulierung gemäß Anspruch 18 oder 19, **dadurch gekennzeichnet, dass** das Gewichtsverhältnis L1 / L2 1:5 bis 2:1 beträgt.

21. Formulierung gemäß einem der Ansprüche 18 bis 20, **dadurch gekennzeichnet, dass** die Konzentration aller Polymere zusammen 40 bis 50 Gew.-% bezüglich der Summe aller Bestandteile der Formulierung beträgt.

22. Formulierung gemäß einem der Ansprüche 18 bis 21, **dadurch gekennzeichnet, dass** das mittlere Molekulargewicht M_{w} der eingesetzten Ethylen-Vinylester-Copolymere (B) mindestens 30000 g/mol beträgt.

23. Formulierung gemäß einem der Ansprüche 18 bis 22, **dadurch gekennzeichnet, dass** die Ethylen-Vinylester-Copolymere (B) 55 bis 75 Gew.-% Ethylen sowie 25 bis 45 Gew.-% Vinylester umfassen.

24. Formulierung gemäß einem der Ansprüche 18 bis 22, **dadurch gekennzeichnet, dass** die Ethylen-Vinylester-Copolymere (B) 60 bis 70 Gew.-% Ethylen sowie 30 bis 40 Gew.-% Vinylester umfassen.

25. Formulierung gemäß einem der Ansprüche 18 bis 24, **dadurch gekennzeichnet, dass** R³ für einen Methylrest steht.

26. Formulierung gemäß einem der Ansprüche 18 bis 25, **dadurch gekennzeichnet, dass** R² für einen linearen Alkylrest mit 16 bis 30 Kohlenstoffatomen steht.

27. Formulierung gemäß einem der Ansprüche 18 bis 25, **dadurch gekennzeichnet, dass** R² für einen linearen Alkylrest mit 18 bis 24 Kohlenstoffatomen steht.

28. Formulierung gemäß einem der Ansprüche 18 bis 27, **dadurch gekennzeichnet, dass** die Menge der Monomere (A) 75 bis 85 Gew.-% und die der Ethylen-Vinylester-Copolymere (B) 15 bis 25 Gew.-% bezogen auf die Summe aus Monomeren (A) und Ethylen-Vinylester-Copolymeren (B) beträgt.

29. Formulierung gemäß einem der Ansprüche 18 bis 28, **dadurch gekennzeichnet, dass** als Monomere (A) neben den Monomeren (A1) Alkyl(meth)acrylate (A2) der allgemeinen Formel H₂C=CR¹-COOR⁴ eingesetzt werden, wobei R¹ für H oder Methyl und R⁴ für einen Kohlenwasserstoffrest ausgewählt aus der Gruppe von Resten R^{4a}, R^{4b}, R^{4c} und R^{4d} steht und die Reste wie folgt definiert sind
R^{4a}: lineare Alkylreste mit 1 bis 11 Kohlenstoffatomen,
R^{4b}: verzweigte Alkylreste mit 4 bis 60 Kohlenstoffatomen,
R^{4c}: unsubstituierte oder alkylsubstituierte gesättigte cyclische Kohlenwasserstoffreste mit 5 bis 30 Kohlenstoffatomen,
R^{4d}: unsubstituierte oder alkylsubstituierte aromatische Kohlenwasserstoffreste mit 6 bis 30 Kohlenstoffatomen.

30. Formulierung gemäß einem der Ansprüche 18 bis 28, **dadurch gekennzeichnet, dass** als Monomere (A) ausschließlich Alkyl(meth)acrylate (A1) eingesetzt werden.

31. Formulierung gemäß einem der Ansprüche 18 bis 30, **dadurch gekennzeichnet, dass** die Formulierung mittels eines Verfahrens gemäß einem der Ansprüche 1 bis 17 erhältlich ist.

32. Verwendung einer Polymerformulierung gemäß einem der Ansprüche 18 bis 31 als Pour-Point-Depressant für Rohöl, Mineralöl und/oder Mineralölprodukte, indem man dem Rohöl, dem Mineralöl und/oder den Mineralölprodukten mindestens eine Formulierung gemäß einem der Ansprüche 18 bis 31 zusetzt.

33. Verwendung gemäß Anspruch 32, **dadurch gekennzeichnet, dass** die eingesetzte Formulierung zusätzlich mindestens einen Wachsdispergator umfasst.

34. Verwendung gemäß Anspruch 32 oder 33, **dadurch gekennzeichnet, dass** die zugesetzte Menge 50 bis 1500 ppm der polymeren Zusammensetzung bzgl. des Öls beträgt.

35. Verwendung gemäß einem der Ansprüche 32 bis 34, **dadurch gekennzeichnet, dass** es sich um Rohöl handelt und man die Formulierung in eine Rohölpipeline injiziert.

36. Verwendung gemäß einem der Ansprüche 32 bis 34, **dadurch gekennzeichnet, dass** es sich um Rohöl handelt und man die Formulierung in eine Produktionsbohrung injiziert.

37. Verwendung gemäß einem der Ansprüche 35 oder 36, **dadurch gekennzeichnet, dass** die Injektion auf einer Offshore-Plattform erfolgt.

38. Verwendung einer Polymerformulierung gemäß einem der Ansprüche 18 bis 31 zur Vermeidung von Wachsablagerungen auf Oberflächen, welche in Kontakt mit Rohöl, Mineralöl und/oder Mineralölprodukten stehen, indem man dem Rohöl, dem Mineralöl und/oder den Mineralölprodukten mindestens eine Formulierung gemäß einem der Ansprüche 18 bis 31 zusetzt.

## Claims

1. A process for producing a polymer formulation at least comprising
• two different solvents and
• a polymeric composition obtainable by free-radical polymerization of at least one monoethylenically unsaturated monomer (A) in the presence of at least one ethylene-vinyl ester copolymer (B),
▪ the monomers (A) comprising at least 70% by weight - based on the amount of all monomers (A) - of at least one alkyl (meth)acrylate (A1) of the general formula H₂C=CR¹-COOR² where R¹ is H or a methyl group and R² is a linear alkyl radical having 12 to 60 carbon atoms,
▪ the ethylene-vinyl ester copolymers (B) comprising 55 to 85% by weight of ethylene and 15 to 45% by weight of vinyl esters of the general formula H₂C=CH-O-(O)C-R³ (III) where R³ is H or a C₁- to C₄ hydrocarbyl radical, and
▪ the amount of the monomers (A) being 70 to 90% by weight and that of the ethylene-vinyl ester copolymers (B) 10 to 30% by weight based on the sum of the monomers (A) and the ethylene-vinyl ester copolymers (B) together,
wherein the solvents comprise at least
• a nonpolar solvent (S1) comprising saturated aliphatic hydrocarbyl groups and having a flashpoint ≥ 60°C, and
• an aromatic hydrocarbon (S2) having a flashpoint ≥ 60°C,
and the process comprises at least the following process steps:
(I) providing a solution at least comprising monomers (A) and ethylene-vinyl ester copolymers (B) each in the abovementioned amounts in at least one solvent (S1), and
(II) free-radically polymerizing the monomers (A) in the presence of the ethylene-vinyl ester copolymers (B) by addition of at least one thermally decomposing initiator for the free-radical polymerization to the solution obtained in (I) and polymerizing at a temperature of at least 50°C, the reaction medium being diluted with solvents (S2) before and/or during and/or after the polymerization,
where the amount of the solvents (S1) and (S2) is such that the concentration of all polymers prepared together at the end of process step (II) is 35 to 55% by weight based on the sum of all components of the solution.

2. The process according to claim 1, wherein solvent (S1) comprises saturated aliphatic hydrocarbons having a flashpoint ≥ 60°C.

3. The process according to claim 2, wherein process step (I) comprises at least the following component steps:
(Ia) preparation of a solution comprising at least alkyl (meth)acrylates (A1) in at least one aliphatic hydrocarbon as solvent (S1) by esterifying at least one alcohol of the general formula R²-OH with (meth) acrylic acid H₂C=CR¹-COOH in the presence of solvents (S1), and
(Ib) mixing the solution obtained in process step (Ia) with at least one ethylene-vinyl ester copolymer (B) and optionally further monomers (A) other than (A1).

4. The process according to any of claims 1 to 3, wherein a portion of the solvents (S2) is added during and a portion of the solvents (S2) after the polymerization.

5. The process according to any of claims 1 to 3, wherein a portion of the solvents (S2) is added before and a portion of the solvents (S2) after the polymerization.

6. The process according to any of claims 1 to 5, wherein the weight ratio of the solvents S1 / S2 is 1:5 to 2:1.

7. The process according to any of claims 1 to 6, wherein the concentration of the monomers (A) in the solvents (S1) at the start of process step (II) is 50 to 85% by weight.

8. The process according to any of claims 1 to 7, wherein the amount of the solvents (S1) and (S2) is such that the concentration of all polymers prepared together at the end of process step (II) is 40 to 50% by weight based on the sum of all components of the solution.

9. The process according to any of claims 1 to 8, wherein the mean molecular weight M_{w} of the ethylene-vinyl ester copolymers used is at least 30 000 g/mol.

10. The process according to any of claims 1 to 9, wherein the ethylene-vinyl ester copolymers (B) comprise 55 to 75% by weight of ethylene and 25 to 45% by weight of vinyl esters.

11. The process according to any of claims 1 to 9, wherein the ethylene-vinyl ester copolymers (B) comprise 60 to 70% by weight of ethylene and 30 to 40% by weight of vinyl esters.

12. The process according to any of claims 1 to 11, wherein R³ is a methyl radical.

13. The process according to any of claims 1 to 12, wherein R² is a linear alkyl radical having 16 to 30 carbon atoms.

14. The process according to any of claims 1 to 12, wherein R² is a linear alkyl radical having 18 to 24 carbon atoms.

15. The process according to any of claims 1 to 14, wherein the amount of the monomers (A) is 75 to 85% by weight and that of the ethylene-vinyl ester copolymers (B) 15 to 25% by weight based on the sum of monomers (A) and ethylene-vinyl ester copolymers (B).

16. The process according to any of claims 1 to 15, wherein the monomers (A) used, as well as monomers (A1), are different (meth)acrylates (A2) of the general formula H₂C=CR¹-COOR⁴ where R¹ is H or methyl and R⁴ is a hydrocarbyl radical selected from the group of R^{4a}, R^{4b}, R^{4c} and R^{4d} radicals and the radicals are each defined as follows:
R^{4a}: linear alkyl radicals having 1 to 11 carbon atoms,
R^{4b}: branched alkyl radicals having 4 to 60 carbon atoms,
R^{4c}: unsubstituted or alkyl-substituted saturated cyclic hydrocarbyl
radicals having 5 to 30 carbon atoms, or
R^{4d}: unsubstituted or alkyl-substituted aromatic hydrocarbyl radicals having
6 to 30 carbon atoms.

17. The process according to any of claims 1 to 15, wherein the monomers (A) used are exclusively alkyl (meth)acrylates (A1).

18. A polymer formulation at least comprising
• two different solvents and
• a polymeric composition obtainable by free-radical polymerization of at least one monoethylenically unsaturated monomer (A) in the presence of at least one ethylene-vinyl ester copolymer (B),
▪ the monomers (A) comprising at least 70% by weight - based on the amount of all monomers (A) - of at least one alkyl (meth)acrylate (A1) of the general formula H₂C=CR¹-COOR² where R¹ is H or a methyl group and R² is a linear alkyl radical having 12 to 60 carbon atoms,
▪ the ethylene-vinyl ester copolymers (B) comprising 55 to 85% by weight of ethylene and 15 to 45% by weight of vinyl esters of the general formula H₂C=CH-O-(O)C-R³ (III) where R³ is H or a C₁- to C₄ hydrocarbyl radical, and
▪ the amount of the monomers (A) being 70 to 90% by weight and that of the ethylene-vinyl ester copolymers (B) 10 to 30% by weight based on the sum of the monomers (A) and the ethylene-vinyl ester copolymers (B) together,
wherein the solvents comprise at least
• a nonpolar solvent (S1) comprising saturated aliphatic hydrocarbyl groups and having a flashpoint ≥ 60°C, and
• an aromatic hydrocarbon (S2) having a flashpoint ≥ 60°C,
where the concentration of all polymers together is 35 to 55% by weight based on the sum of all constituents of the formulation.

19. The formulation according to claim 18, wherein solvent (S1) comprises saturated aliphatic hydrocarbons having a flashpoint ≥ 60°C.

20. The process according to claim 18 or 19, wherein the weight ratio S1 / S2 is 1:5 to 2:1.

21. The formulation according to any of claims 18 to 20, wherein the concentration of all polymers together is 40 to 50% by weight based on the sum of all constituents of the formulation.

22. The formulation according to any of claims 18 to 21, wherein the mean molecular weight M_{w} of the ethylene-vinyl ester copolymers (B) used is at least 30 000 g/mol.

23. The formulation according to any of claims 18 to 22, wherein the ethylene-vinyl ester copolymers (B) comprise 55 to 75% by weight of ethylene and 25 to 45% by weight of vinyl esters.

24. The formulation according to any of claims 18 to 22, wherein the ethylene-vinyl ester copolymers (B) comprise 60 to 70% by weight of ethylene and 30 to 40% by weight of vinyl esters.

25. The formulation according to any of claims 18 to 24, wherein R³ is a methyl radical.

26. The formulation according to any of claims 18 to 25, wherein R² is a linear alkyl radical having 16 to 30 carbon atoms.

27. The formulation according to any of claims 18 to 25, wherein R² is a linear alkyl radical having 18 to 24 carbon atoms.

28. The formulation according to any of claims 18 to 27, wherein the amount of the monomers (A) is 75 to 85% by weight and that of the ethylene-vinyl ester copolymers (B) 15 to 25% by weight based on the sum of monomers (A) and ethylene-vinyl ester copolymers (B).

29. The formulation according to any of claims 18 to 28, wherein the monomers (A) used, as well as monomers (A1), are alkyl (meth)acrylates (A2) of the general formula H₂C=CR¹-COOR⁴ where R¹ is H or methyl and R⁴ is a hydrocarbyl radical selected from the group of R^{4a}, R^{4b}, R^{4c} and R^{4d} radicals and the radicals are each defined as follows:
R^{4a}: linear alkyl radicals having 1 to 11 carbon atoms,
R^{4b}: branched alkyl radicals having 4 to 60 carbon atoms,
R^{4c}: unsubstituted or alkyl-substituted saturated cyclic hydrocarbyl radicals having 5 to 30 carbon atoms,
R^{4d}: unsubstituted or alkyl-substituted aromatic hydrocarbyl radicals having 6 to 30 carbon atoms.

30. The formulation according to any of claims 18 to 28, wherein the monomers (A) used are exclusively alkyl (meth)acrylates (A1).

31. The formulation according to any of claims 18 to 30, which is obtainable by means of a process according to any of claims 1 to 17.

32. The use of a polymer formulation according to any of claims 18 to 31 as a pour point depressant for crude oil, mineral oil and/or mineral oil products, by adding at least one formulation according to any of claims 18 to 31 to the crude oil, mineral oil and/or mineral oil products.

33. The use according to claim 32, wherein the formulation used additionally comprises at least one wax dispersant.

34. The use according to claim 32 or 33, wherein the amount added is 50 to 1500 ppm of the polymeric composition based on the oil.

35. The use according to any of claims 32 to 34, wherein the oil is crude oil and the formulation is injected into a crude oil pipeline.

36. The use according to any of claims 32 to 34, wherein the oil is crude oil and the formulation is injected into a production well.

37. The use according to either of claims 35 and 36, wherein the injection is effected on an offshore platform.

38. The use of a polymer formulation according to any of claims 18 to 31 for prevention of wax deposits on surfaces in contact with crude oil, mineral oil and/or mineral oil products, by adding at least one formulation according to any of claims 18 to 31 to the crude oil, mineral oil and/or mineral oil products.

## Revendications

1. Procédé pour la préparation d'une composition de polymère comprenant au moins
• deux solvants différents, ainsi
• qu'une composition polymère pouvant être obtenue par polymérisation radicalaire d'au moins un monomère à insaturation monoéthylénique (A) en présence d'au moins un copolymère éthylène-ester vinylique (B),
• les monomères (A) comprenant au moins 70 % en poids - par rapport à la quantité de tous les monomères (A) - d'au moins un (méth)acrylate d'alkyle (A1) de formule générale H₂C=CR¹-COOR², dans laquelle R¹ représente H ou un groupe méthyle et R² représente un radical alkyle linéaire ayant de 12 à 60 atomes de carbone,
• les copolymères éthylène/ester vinylique (B) comprenant 55 à 85 % en poids d'éthylène ainsi que 15 à 45 % en poids d'ester vinylique de formule générale H₂C=CH-O-(O)C-R³ (III), dans laquelle R³ représente H ou un radical hydrocarboné en C₁-C₄, et
• la quantité des monomères (A) valant de 70 à 90 % en poids et celle des copolymères éthylène/ester vinylique (B) valant de 10 à 30 % en poids, par rapport à la somme des monomères (A) et des copolymères éthylène/ ester vinylique (B) ensemble,
**caractérisé en ce que** pour ce qui est des solvants il s'agit au moins
• d'un solvant non polaire (L1) comprenant des groupes hydrocarbonés aliphatiques saturés, ayant un point de flamme ≥ 60 °C, et
• d'un hydrocarbure aromatique (L2) ayant un point de flamme ≥ 60 °C,
et le procédé comprend au moins les étapes suivantes de procédé :
(I) disposition d'une solution comprenant au moins les monomères (A) ainsi que les copolymères éthylène/ester vinylique (B) chacun en les quantités indiquées plus haut dans au moins un solvant (L1), ainsi que
(II) polymérisation radicalaire des monomères (A) en présence des copolymères éthylène/ester vinylique (B) par addition d'au moins un amorceur pour la polymérisation radicalaire, se décomposant thermiquement, à la solution obtenue selon (I) et polymérisation à une température d'au moins 50 °C, en diluant le milieu réactionnel avec les solvants (L2) avant et/ou pendant et/ou après la polymérisation,
en choisissant la quantité des solvants (L1) et (L2) de manière que la concentration de tous les polymères produits ensemble à la fin de l'étape (II) du procédé soit dans la plage de 35 à 55 % en poids par rapport à la somme de tous les composants de la solution.

2. Procédé selon la revendication 1, **caractérisé en ce que** pour ce qui est du solvant (L1) il s'agit d'hydrocarbures aliphatiques saturés ayant un point de flamme ≥ 60 °C.

3. Procédé selon la revendication 2, **caractérisé en ce que** l'étape (I) du procédé comprend au moins les étapes partielles suivantes :
(Ia) préparation d'une solution comprenant au moins des (méth)acrylates d'alkyle (A1) dans au moins un hydrocarbure aliphatique en tant que solvant (L1) par estérification d'au moins un alcool de formule générale R²-OH par de l'acide (méth)acrylique H₂C=CR¹-COOH en présence de solvants (L1), ainsi que
(Ib) mélange de la solution obtenue dans l'étape (Ia) du procédé avec au moins un copolymère éthylène/ ester vinylique (B) ainsi qu'en option d'autres monomères (A) différents de (A1).

4. Procédé selon l'une quelconque des revendications 1 à 3, **caractérisé en ce qu'**on ajoute une partie des solvants (L2) pendant et une partie des solvants (L2) après la polymérisation.

5. Procédé selon l'une quelconque des revendications 1 à 3, **caractérisé en ce qu'**on ajoute une partie des solvants (L2) avant et une partie des solvants (L2) après la polymérisation.

6. Procédé selon l'une quelconque des revendications 1 à 5, **caractérisé en ce que** le rapport pondéral des solvants L1 / L2 vaut de 1:5 à 2:1.

7. Procédé selon l'une quelconque des revendications 1 à 6, **caractérisé en ce qu'**au début de l'étape (II) du procédé la concentration des monomères (A) dans les solvants (L1) vaut de 50 à 85 % en poids.

8. Procédé selon l'une quelconque des revendications 1 à 7, **caractérisé en ce qu'**on choisit la quantité des solvants (L1) et (L2) de manière que la concentration de tous les polymères produits ensemble à la fin de l'étape (II) du procédé soit dans la plage de 40 à 50 % en poids par rapport à la somme de tous les composants de la solution.

9. Procédé selon l'une quelconque des revendications 1 à 8, **caractérisé en ce que** la masse moléculaire moyenne M_{w} des copolymères éthylène/ester vinylique utilisés vaut au moins 30 000 g/mole.

10. Procédé selon l'une quelconque des revendications 1 à 9, **caractérisé en ce que** les copolymères éthylène/ester vinylique (B) comprennent de 55 à 75 % en poids d'éthylène ainsi que de 25 à 45 % en poids d'ester vinylique.

11. Procédé selon l'une quelconque des revendications 1 à 9, **caractérisé en ce que** les copolymères éthylène/ester vinylique (B) comprennent de 60 à 70 % en poids d'éthylène ainsi que de 30 à 40 % en poids d'ester vinylique.

12. Procédé selon l'une quelconque des revendications 1 à 11, **caractérisé en ce que** R³ représente un groupe méthyle.

13. Procédé selon l'une quelconque des revendications 1 à 12, **caractérisé en ce que** R² représente un radical alkyle linéaire ayant de 16 à 30 atomes de carbone.

14. Procédé selon l'une quelconque des revendications 1 à 12, **caractérisé en ce que** R² représente un radical alkyle linéaire ayant de 18 à 24 atomes de carbone.

15. Procédé selon l'une quelconque des revendications 1 à 14, **caractérisé en ce que** la quantité des monomères (A) vaut de 75 à 85 % en poids et celle des copolymères éthylène/ester vinylique (B) vaut de 15 à 25 % en poids par rapport à la somme des monomères (A) et des copolymères éthylène/ester vinylique (B).

16. Procédé selon l'une quelconque des revendications 1 à 15, **caractérisé en ce qu'**on utilise comme monomères (A), en plus des monomères (A1), des (méth)acrylates d'alkyle (A2) différents de ceux-ci, de formule générale H₂C=CR¹-COOR⁴, dans laquelle R¹ représente H ou le groupe méthyle et R⁴ représente un radical hydrocarboné choisi dans le groupe de radicaux R^{4a}, R^{4b}, R^{4c} et R^{4d} et les radicaux sont définis comme suit :
R^{4a} : radicaux alkyle linéaires ayant de 1 à 11 atomes de carbone,
R^{4b} : radicaux alkyle ramifiés ayant de 4 à 60 atomes de carbone,
R^{4c} : radicaux hydrocarbonés cycliques saturés non substitués ou substitués par alkyle, ayant de 5 à 30 atomes de carbone, ou
R^{4d} : radicaux hydrocarbonés aromatiques non substitués ou substitués par alkyle, ayant de 6 à 30 atomes de carbone.

17. Procédé selon l'une quelconque des revendications 1 à 15, **caractérisé en ce qu'**on utilise comme monomères (A) exclusivement des (méth)acrylates d'alkyle (A1).

18. Composition de polymère comprenant au moins
• deux solvants différents, ainsi
• qu'une composition polymère pouvant être obtenue par polymérisation radicalaire d'au moins un monomère à insaturation monoéthylénique (A) en présence d'au moins un copolymère éthylène-ester vinylique (B),
• les monomères (A) comprenant au moins 70 % en poids - par rapport à la quantité de tous les monomères (A) - d'au moins un (méth)acrylate d'alkyle (A1) de formule générale H₂C=CR¹-COOR², dans laquelle R¹ représente H ou un groupe méthyle et R² représente un radical alkyle linéaire ayant de 12 à 60 atomes de carbone,
• les copolymères éthylène/ester vinylique (B) comprenant 55 à 85 % en poids d'éthylène ainsi que 15 à 45 % en poids d'ester vinylique de formule générale H₂C=CH-O-(O)C-R³ (III), dans laquelle R³ représente H ou un radical hydrocarboné en C₁-C₄, et
• la quantité des monomères (A) valant de 70 à 90 % en poids et celle des copolymères éthylène/ester vinylique (B) valant de 10 à 30 % en poids, par rapport à la somme des monomères (A) et des copolymères éthylène/ ester vinylique (B) ensemble,
**caractérisée en ce que** pour ce qui est des solvants il s'agit au moins
• d'un solvant non polaire (L1) comprenant des groupes hydrocarbonés aliphatiques saturés, ayant un point de flamme ≥ 60 °C, et
• d'un hydrocarbure aromatique (L2) ayant un point de flamme ≥ 60 °C,
la concentration de tous les polymères ensemble valant de 35 à 55 % en poids par rapport à la somme de tous les composants de la composition.

19. Composition selon la revendication 18, **caractérisée en ce que** pour ce qui est du solvant (L1) il s'agit d'hydrocarbures aliphatiques saturés ayant un point de flamme ≥ 60 °C.

20. Composition selon la revendication 18 ou 19, **caractérisée en ce que** le rapport pondéral L1 / L2 vaut de 1:5 à 2:1.

21. Composition selon l'une quelconque des revendications 18 à 20, **caractérisée en ce que** la concentration de tous les polymères ensemble vaut de 40 à 50 % en poids par rapport à la somme de tous les composants de la composition.

22. Composition selon l'une quelconque des revendications 18 à 21, **caractérisée en ce que** la masse moléculaire moyenne M_{w} des copolymères éthylène/ester vinylique (B) utilisés vaut au moins 30 000 g/mole.

23. Composition selon l'une quelconque des revendications 18 à 22, **caractérisée en ce que** les copolymères éthylène/ester vinylique (B) comprennent de 55 à 75 % en poids d'éthylène ainsi que de 25 à 45 % en poids d'ester vinylique.

24. Composition selon l'une quelconque des revendications 18 à 22, **caractérisée en ce que** les copolymères éthylène/ester vinylique (B) comprennent de 60 à 70 % en poids d'éthylène ainsi que de 30 à 40 % en poids d'ester vinylique.

25. Composition selon l'une quelconque des revendications 18 à 24, **caractérisée en ce que** R³ représente un radical méthyle.

26. Composition selon l'une quelconque des revendications 18 à 25, **caractérisée en ce que** R² représente un radical alkyle linéaire ayant de 16 à 30 atomes de carbone.

27. Composition selon l'une quelconque des revendications 18 à 25, **caractérisé en ce que** R² représente un radical alkyle linéaire ayant de 18 à 24 atomes de carbone.

28. Composition selon l'une quelconque des revendications 18 à 27, **caractérisée en ce que** la quantité des monomères (A) vaut de 75 à 85 % en poids et celle des copolymères éthylène/ester vinylique (B) vaut de 15 à 25 % en poids par rapport à la somme des monomères (A) et des copolymères éthylène/ester vinylique (B).

29. Composition selon l'une quelconque des revendications 18 à 28, **caractérisée en ce qu'**on utilise comme monomères (A), en plus des monomères (A1), des (méth)acrylates d'alkyle (A2) de formule générale H₂C=CR¹-COOR⁴, dans laquelle R¹ représente H ou le groupe méthyle et R⁴ représente un radical hydrocarboné choisi dans le groupe de radicaux R^{4a}, R^{4b}, R^{4c} et R^{4d} et les radicaux sont définis comme suit :
R^{4a} : radicaux alkyle linéaires ayant de 1 à 11 atomes de carbone,
R^{4b} : radicaux alkyle ramifiés ayant de 4 à 60 atomes de carbone,
R^{4c} : radicaux hydrocarbonés cycliques saturés non substitués ou substitués par alkyle, ayant de 5 à 30 atomes de carbone, ou
R^{4d} : radicaux hydrocarbonés aromatiques non substitués ou substitués par alkyle, ayant de 6 à 30 atomes de carbone.

30. Composition selon l'une quelconque des revendications 18 à 28, **caractérisé en ce qu'**on utilise comme monomères (A) exclusivement des (méth)acrylates d'alkyle (A1).

31. Composition selon l'une quelconque des revendications 18 à 30, **caractérisée en ce que** la composition peut être obtenue par un procédé selon l'une quelconque des revendications 1 à 17.

32. Utilisation d'une composition de polymère selon l'une quelconque des revendications 18 à 31 en tant qu'abaisseur du point d'écoulement pour pétrole brut, huile minérale et/ou produits à base d'huiles minérales, par addition au pétrole brut, à l'huile minérale et/ou aux produits à base d'huiles minérales d'au moins une composition selon l'une quelconque des revendications 18 à 31.

33. Utilisation selon la revendication 32, **caractérisée en ce que** la composition utilisée comprend en outre au moins un dispersant de cire.

34. Utilisation selon l'une quelconque des revendications 32 et 33, **caractérisée en ce que** la quantité ajoutée vaut de 50 à 1 500 ppm de la composition polymère par rapport à l'huile.

35. Utilisation selon l'une quelconque des revendications 32 à 34, **caractérisée en ce qu'**il s'agit de pétrole brut et on injecte la composition dans un pipeline de pétrole brut.

36. Utilisation selon l'une quelconque des revendications 32 à 34, **caractérisée en ce qu'**il s'agit de pétrole brut et on injecte la composition dans un puits de production.

37. Utilisation selon l'une quelconque des revendications 35 et 36, **caractérisée en ce que** l'injection a lieu sur une plateforme en mer.

38. Utilisation d'une composition de polymère selon l'une quelconque des revendications 18 à 31, pour éviter la formation de dépôts de cire sur des surfaces qui sont en contact avec du pétrole brut, de l'huile minérale et/ou des produits à base d'huiles minérales, par addition au pétrole brut, à l'huile minérale et/ou aux produits à base d'huiles minérales d'au moins une composition selon l'une quelconque des revendications 18 à 31.
